Europäisches Patentamt

European Patent Office

Office européen des brevets

(19)

(11) EP 1 400 956 A2

(12) EUROPEAN PATENT APPLICATION

(43) Date of publication:
24.03.2004 Bulletin 2004/13

(51) Int Cl.7: G11B 5/00, G11B 5/64,
G11B 5/66, G11B 5/84,
G11B 5/85, G11B 11/105

(21) Application number: 03255849.6

(22) Date of filing: 18.09.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 18.09.2002 JP 2002271120

(71) Applicant: MATSUSHITA ELECTRIC INDUSTRIAL
CO., LTD.
Kadoma-shi, Osaka 571-8501 (JP)

(72) Inventors:
• Murakami, Motoyoshi
  Osaka 573-0081 (JP)
• Birukawa, Masahiro
  Osaka 573-0077 (JP)

(74) Representative: Tothill, John Paul
Frank B. Dehn & Co.
179 Queen Victoria Street
London EC4V 4EL (GB)

(54) **Magnetic recording medium, method for producing the same and magnetic recording/reproducing apparatus**

(57)     A magnetic recording medium includes: a disk substrate 11; and a recording layer 15 having magnetic anisotropy along a direction perpendicular to a surface of the disk substrate 11. The recording layer 15 is formed so that a product of a coercive force Hc and saturated magnetization Ms of the recording layer 15 (Ms·Hc) at room temperatures is increased sufficiently so that a shortest mark length of the recording layer 15 can be decreased to a desired value.

FIG. 1

## Description

The present invention relates to a magnetic recording medium onto/from which information is recorded/erased utilizing a temperature increase caused by irradiation with laser light and from which a recorded signal is read out using a magneto-optical effect. The present invention also relates to a method for producing the magnetic recording medium and a magnetic recording/reproducing apparatus.

Conventionally, various types of optical memories have been proposed for enabling the reproduction of information by irradiating an information recording medium with an optical beam and detecting light reflected therefrom, which include: a ROM type memory that records information using phase pits; a write-once type optical memory that records information by making a hole in a recording film by irradiation with an optical beam; a phase change type optical memory that records information by changing a crystal phase of a recording film by irradiation with an optical beam; and a magneto-optical memory that records information by changing the direction of magnetization of a recording layer by irradiation with an optical beam and by application of a magnetic field.

In these optical memories, the reproduction resolution of a signal is determined predominantly by a wavelength $\lambda$ of a reproduction light and a numerical aperture (N.A.) of an objective lens, and a pit cycle at a detection limit approximately equals $\lambda/(2 \cdot N.A.)$. In this respect, however, since it is not easy to shorten the wavelength $\lambda$ of the reproduction light and to increase the numerical aperture (N.A.) of the objective lens, attempts have been made to increase a recording density of information by devising a recording medium and a reproduction method.

Particularly, for magneto-optical recording media, various attempts have been made to increase the recording density of information. For instance, technology is disclosed for improving the reproduction resolution beyond the above-stated detection limit determined by the wavelength $\lambda$ of the reproduction light and the numerical aperture (N.A.) of the objective lens by sequentially shifting a domain wall along a direction parallel to a surface of the magneto-optical recording medium when the domain wall comes closer to an optical beam for reproduction and detecting the shifting of the domain wall (See JP 6(1994)-290496 A). According to this technology, a particularly favorable reproduction signal can be obtained if a reproduction layer, which is a first magnetic layer whose domain wall shifts when it comes closer to the optical beam for reproduction, is isolated magnetically between the respective information tracks.

However, in order to record information onto a recording layer of a magneto-optical recording medium at a high density, there is a need to record miniscule magnetic domains stably and to maintain the same. However, if the magnetic domains are miniscule, domain walls might shift during recording, resulting in a problem of the instability of the shape and the size of the magnetic domains.

Particularly, in the case of some compositions of a recording layer and a film deposition method, the vertical magnetic anisotropy of a recording layer becomes small, and therefore there is a problem of the difficulty in the stable formation of miniscule magnetic domains.

In addition, in order to transcribe magnetic domains of a recording layer to a reproduction layer by using a magnetic super-resolution technology, stable magnetic coupling that utilizes the vertical magnetic anisotropy of the recording layer is required. If the transcription becomes unstable because the transcription properties are changed depending on the magnetic properties of the recording layer, transcription noise and noise associated with the shift of the domain walls are increased, thus generating a problem of deterioration of the quality of a reproduction signal.

Furthermore, when a groove for tracking is formed on a disk substrate of a magneto-optical recording medium, the surface shape of the disk substrate would be changed depending on a width of the groove and a depth of the groove, which leads to a problem in that magnetic properties such as the vertical magnetic anisotropy of the recording layer and an exchange coupling force between the recording films are likely to change.

Therefore, with the foregoing in mind, it is an object of the present invention to provide a magnetic recording medium that enables recording/reproducing of a signal at high speed beyond the diffraction limit of an optical spot for recording/reproducing information and that enables the reproduction of a signal without a decrease in the amount of a detected signal even in the case of miniscule magnetic domains, whereby recording density and transfer speed are improved significantly and magnetic domains can be formed stably when the information is recorded at a high density, and to provide a method for producing the recording magnetic medium and a magnetic recording/reproducing apparatus.

According to the configurations of the present invention, MsHc of a recording layer is increased, and therefore even when information is recorded at a high density with a mark length of 0.3 $\mu$m or less, excellent signal properties can be obtained by the reproduction using the magnetic super-resolution such as the DWDD technology. In addition, since magnetic domains are formed and held with stability, a magnetic recording medium and a magnetic recording/reproducing apparatus with stability against the repeated recording/reproducing can be obtained.

A magnetic recording medium according to the present invention includes: a disk substrate; and a recording layer having magnetic anisotropy along a direction perpendicular to a surface of the disk substrate. The recording layer is formed so that a product of a coercive force Hc and saturated magnetization Ms of the recording layer (Ms·Hc) at room temperatures is increased sufficiently so that a shortest mark length of the recording layer can be decreased to a desired value.

In this specification, a "magnetic recording medium" includes both of a magneto-optical recording medium in which information is recorded/reproduced by means of an optical beam and a magnetic recording medium such as hard disk in which information is recorded/reproduced by a magnetic field from a magnetic head.

A magnetic recording/reproducing apparatus according to the present invention includes: a recording unit provided for recording information in the recording layer that is formed in the magnetic recording medium according to the present invention; and a reproducing unit for transcribing magnetic domains that are formed in the recording layer into a reproduction layer and for making a domain wall between the transcribed magnetic domains shift so as to reproduce the recorded information.

In the magnetic recording medium according to one embodiment, the recording layer is formed so that a product of a coercive force Hc and saturated magnetization Ms of the recording layer (Ms·Hc) at room temperatures is increased sufficiently so that a shortest mark length of the recording layer can be decreased to a desired value. With this configuration, since the MsHc of the recording layer is increased, even when information is recorded at a high density with a mark length of 0.3 μm or less, excellent signal properties can be obtained by the reproduction using the magnetic super-resolution such as the DWDD technology.

In this embodiment, it is preferred that the product Ms·Hc of the coercive force Hc and the saturated magnetization Ms satisfies the following relationship:

$Ms·Hc > 3 \times 10^6$ erg/cm$^3$.

Preferably, the above-stated magnetic recording medium further includes: a reproduction layer formed between the recording layer and the disk substrate for reproducing information recorded in the recording layer; and an intermediate layer formed between the reproduction layer and the recording layer for controlling exchange coupling between the reproduction layer and the recording layer. The recorded information is thermomagnetically recorded as magnetic domains in the recording layer, the magnetic domains are transcribed into the reproduction layer, and a domain wall between the magnetic domains that are transcribed into the reproduction layer displaces along a direction parallel to a surface of the reproduction layer, so that the recorded information is reproduced.

Preferably, the shortest mark length of recording marks that correspond to a pattern of the recorded information formed in the recording layer is 0.2 μm or less.

Preferably, the recording layer includes at least Tb, Fe and Co or includes a super latticed structure.

Preferably, the Tb, Fe and Co contained in the recording layer are laminated periodically.

Preferably, the Tb, Fe and Co contained in the recording layer are laminated periodically with a thickness of 2 nm or less.

Preferably, in the recording layer, layers of different materials or different composition rates are periodically laminated with each layer having a thickness of 2 nm or less.

Preferably, the recording layer is configured with periodic lamination of a layer of rare-earth rich composition and a layer of transition metal rich composition.

Preferably, the recording layer is formed on an under layer whose surface roughness Ra is at least 0.5 nm or more.

Preferably, a substrate, a dielectric layer or a magnetic layer is used as the under layer.

Preferably, the recording layer is formed by film deposition using an inert gas.

Preferably, the inert gas includes at least one selected from Ne, Ar, Kr and Xe.

Preferably, the recording layer includes at least one selected from Ne, Ar, Kr and Xe atoms.

Preferably, a size of magnetic domains formed in the recording layer is 0.5 μm or less.

Preferably, on the disk substrate, a pit-shaped pattern is formed corresponding to a pattern of magnetic domains formed in the recording layer.

Preferably, on the disk substrate, a pit-shaped convexo-concave pattern is formed, the convexo-concavo pattern having a size smaller than that of the smallest pattern of magnetic domains formed in the recording layer.

In a method for producing a magnetic recording medium according to one embodiment, a shape of a surface of the under layer for forming the recording layer thereon is changed by etching. With this configuration, the recording layer is formed so that a product of a coercive force Hc and saturated magnetization Ms of the recording layer (Ms·Hc) is increased sufficiently. As a result, since the MsHc of the recording layer is increased, even when information is recorded at a high density with a mark length of 0.3 μm or less, excellent signal properties can be obtained by the reproduction using the magnetic super-resolution such as the DWDD technology.

In this embodiment, preferably, a substrate, a dielectric layer or a magnetic layer is used as the under layer.

Preferably, the etching is dry etching including ion irradiation etching and plasma etching.

In another method for producing a magnetic recording medium according to one embodiment, at the time of forming the recording layer, after a vacuum chamber is evacuated so that a degree of vacuum achieved in the vacuum chamber becomes $1 \times 10^{-5}$ Pa or less, at least one selected from Ar gas, Ne gas, Kr gas and Xe gas is introduced into the vacuum chamber. With this configuration, the recording layer is formed so that a product of a coercive force Hc and saturated magnetization Ms of the recording layer (Ms·Hc) is increased sufficiently. As a result, since the MsHc of the recording layer is increased, even when information is recorded at a high density with a mark length of 0.3 μm or less, excellent signal properties can be obtained by the reproduction using the magnetically super-resolution method such as the DWDD technology.

In this embodiment, preferably, partial pressures of $O_2$, $H_2O$, $N_2$ and $H_2$ in the vacuum chamber at the time of forming the recording layer are 100 ppm or less with respect to a film deposition pressure.

Preferably, the film deposition pressure for forming the recording film in the vacuum chamber ranges from 0.4 Pa to 6.0 Pa, inclusive.

Preferably, a film deposition rate for forming the recording layer ranges from 0.5 nm/sec to 10 nm/sec, inclusive.

In a magnetic recording/reproducing apparatus according to one embodiment, magnetic domains that are formed in the recording layer are transcribed into a reproduction layer and a domain wall between the transcribed magnetic domains is shifted so as to reproduce the recorded information. With this configuration, even when information is recorded at a high density with a mark length of 0.3 μm or less, excellent signal properties can be obtained by the reproduction using the magnetic super-resolution such as the DWDD technology.

Preferably, the reproducing unit expands the transcribed magnetic domains by forming a thermal gradient in the reproduction layer so as to reproduce the recorded information.

Preferably, the reproducing unit expands the transcribed magnetic domains in response to an external magnetic field by applying a high-frequency magnetic field modulation from outside to the reproduction layer so as to reproduce the recorded information.

A number of preferred embodiments of the present invention will now be described by way of example only and with reference to the accompanying drawings, in which:

Fig. 1 is a cross-sectional view showing a configuration of a magnetic recording medium according to Embodiment 1.

Fig. 2A schematically shows a cross-section of a recording film that is formed in the magnetic recording medium according to Embodiment 1.

Fig. 2B is a graph showing a relationship between a position along the direction parallel to a surface of the recording film and a temperature of the recording film.

Fig. 2C is a graph showing a relationship between a position along the direction parallel to a surface of the recording film and a domain-wall energy density of the recording film.

Fig. 2D is a graph showing a relationship between a position along the direction parallel to a surface of the recording film and a driving force for the domain walls.

Fig. 3 schematically shows a method for forming a recording layer of the magnetic recording medium according to Embodiment 1.

Fig. 4 is a graph showing a relationship between a lamination structure of the recording layer that is formed in the magnetic recording medium according to Embodiment 1 and Ms·Hc.

Fig. 5 is a graph showing a relationship between Ms·Hc of the recording layer that is formed in the magnetic recording medium according to Embodiment 1 and a recording limit of a recording mark length.

Fig. 6 is a cross-sectional view showing a configuration of a magnetic recording medium according to Embodiment 2.

Fig. 7 schematically shows a method for forming a recording layer of the magnetic recording medium according to Embodiment 2.

Fig. 8 is a cross-sectional view showing a configuration of a magnetic recording medium according to Embodiment 3.

Fig. 9 is a cross-sectional view showing a configuration of a magnetic recording medium according to Embodiment 4.

Fig. 10 is a cross-sectional view showing a configuration of a magnetic recording medium according to Embodiment 5.

Fig. 11 is a perspective view showing a configuration of a magnetic recording medium according to Embodiment 6.

Fig. 12 is a block diagram showing a configuration of a magnetic recording/reproducing apparatus according to Embodiment 6.

Fig. 13 is a block diagram showing a configuration of another magnetic recording/reproducing apparatus according to Embodiment 6.

*Embodiment 1*

Referring now to the drawings, embodiments of the present invention will be described below more specifically.

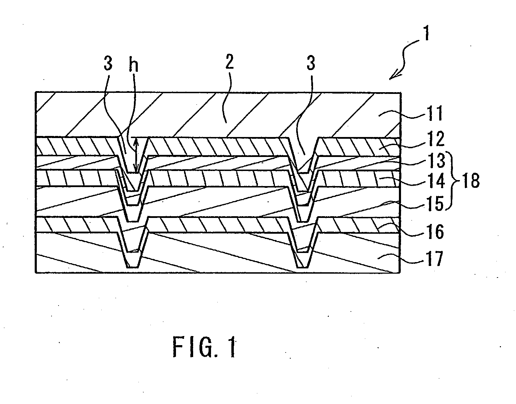

Fig. 1 is a cross-sectional view showing a configuration of a magnetic recording medium (hereinafter also referred to as magnetic disk) according to Embodiment 1 of the present invention. The magnetic disk 1 includes with a transparent disk substrate 11 made for example of polycarbonate. On the disk substrate 11, a dielectric layer 12 is formed for protecting a recording film and for adjusting optical properties of the medium.

On the dielectric layer 12, a recording film 18 is formed. The recording film 18 includes: a reproduction layer 13 formed for detecting information by making use of the shift of domain walls; a recording layer 15 formed for holding the information; and an intermediate switching layer (or an intermediate layer) 14 formed between the reproduction layer 13 and the recording layer 15 for controlling the exchange coupling between the reproduction layer 13 and the recording layer 15. On the recording layer 15, a dielectric layer 16 for protecting the recording film 18 and a protective coating layer 17 are formed in this stated order.

The magnetic recording medium 1 of Embodiment 1 of the present invention shown in Fig. 1 is configured so that the DWDD (Domain Wall Displacement Detection) technology can be applied to the medium, where the DWDD technology enables the super-resolution reproduction beyond the detection limit that is determined by the wavelength of an optical beam for reproduction and a numerical aperture of an objective lens by making a domain wall shift sequentially along the direction parallel to a surface of the reproduction layer 13, when the domain wall comes closer to the optical beam for reproduction, and detecting the shift of this domain wall.

Note here that the recording film 18 including the lamination having the above-stated configuration is one example of configurations to which the DWDD technology can be applied. The DWDD technology is a method for increasing the amplitude of a reproduction signal by making use of the shift of domain walls. For instance, as described in JP 6(1994)-290496 A, a magnetic film having a large interface saturated coercive force is used for the recording layer 15, a magnetic film having a small interface saturated coercive force is used for the reproduction layer 13 in which domain walls shift, and a magnetic film having a relatively low Curie temperature is used for the intermediate cut-off layer 14 for the switching. The present invention, however, is not limited to this example. Since the recording film 18 may be configured with a magnetic film to which the DWDD technology can be applied, the present invention is not limited to such a film configuration.

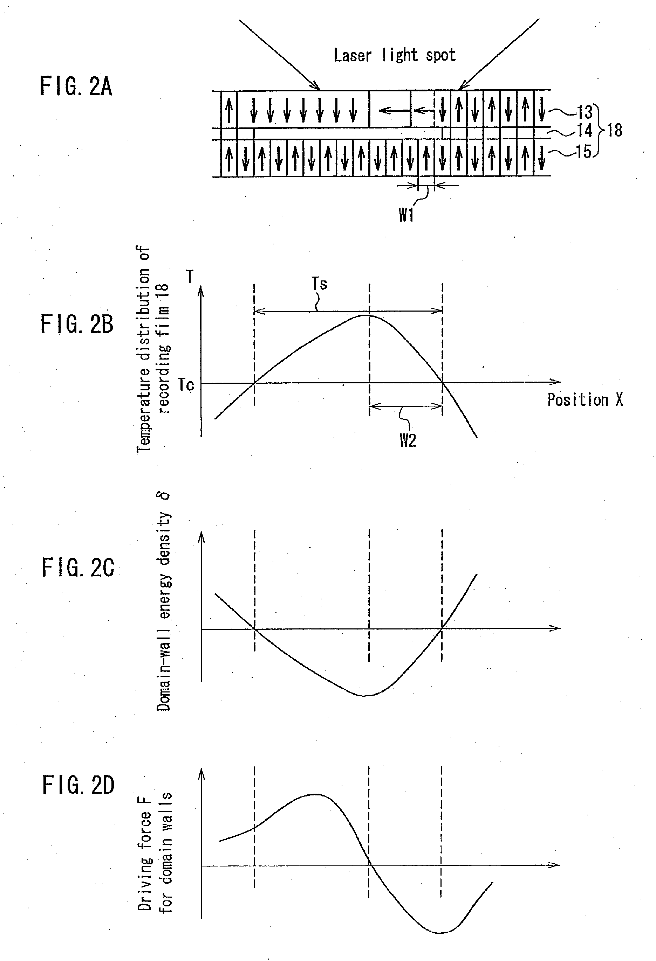

The reproduction principle of the above-stated DWDD technology will be described below, with reference to Figs. 2A to 2D.

Fig. 2A schematically shows a cross-section of the recording film 18 that is formed on the rotating magnetic disk 1, where the recording film 18 having a three-layered structure including the reproduction layer 13 (Fig. 1), the intermediate layer 14 (Fig. 1) and the recording layer 15 (Fig. 1) is formed on the disk substrate 11 (Fig. 1) and the dielectric layer 12 (Fig. 1). Moreover, the dielectric layer 16 (Fig. 1) and the protective coating layer 17 (Fig. 1) made of an UV cured resin are formed thereon in this stated order.

The reproduction layer 13 is made up of a magnetic thin film material having a small domain wall coercivity, the intermediate layer 14 is made up of a magnetic film having a low Curie temperature, and the recording layer 15 is made up of a magnetic film that allows the magnetic domains to be held even in the case of a small domain diameter. Here, in the conventional magnetic recording media, a magnetic domain structure including not-closed domain walls is formed by making a guard band and the like in the reproduction layer.

As shown in Fig. 2A, an information signal is formed as a magnetic domain that is recorded thermomagnetically with a recording mark length of W1 in the recording layer 15 of the recording film 18. In the recording film 18 at a room temperature where the recording film 18 is not irradiated with a laser light spot, the recording layer 15, the intermediate layer 14 and the reproduction layer 13 are coupled together firmly by the exchange coupling force. Therefore, the magnetic domains formed in the recording layer 15 are transcribed and formed onto the reproduction layer 13 as they are.

Fig. 2B shows a relationship between a position x that corresponds to the cross-sectional view of Fig. 2A and a temperature T of the recording film 18. As shown in the drawing, at the time of reproducing a recorded signal, the magnetic disk 1 rotates so that the recording film 18 is irradiated with a laser light spot along a track formed on the magnetic disk 1. At this time, the recording film 18 presents a temperature distribution as shown in Fig. 2B, which includes a temperature region Ts in which the temperature of the intermediate layer 14 (intermediate cut-off layer or switching layer) reaches the Curie temperature Tc or higher, so that the exchange coupling between the reproduction layer 13 and the recording layer 15 is cut off.

In addition, as a result of the irradiation with the reproduction beam, as shown in Fig. 2C, a gradient is generated in the energy density $\sigma$ of domain walls along the x direction of the disk rotation direction. Consequently, as shown in Fig. 2D, a force F for driving domain walls acts on the domain walls of each layer at the position x.

This driving force F acting on the recording film 18 acts so that the domain walls shift toward the direction of lower domain-wall energy density $\sigma$, as shown in Fig. 2D. Since the reproduction layer 13 has properties of a small domain wall coercivity and a high mobility of domain walls, this driving force F shifts the domain walls easily in the reproduction layer 13 having not-closed domain walls. Therefore, as illustrated by arrows, the domain walls of the reproduction layer 13 shift instantaneously at a domain-wall shifting range W2 toward a region at a high temperature and with a small domain-wall energy density $\sigma$. Then, after the domain walls pass through the laser light spot of the reproduction beam, the magnetization of the reproduction layer 13 within the laser light spot is directed in the same direction at a wider region in the laser light spot.

As a result, irrespective of the size of the magnetic domains, the amplitude of a reproduction signal always has a fixed maximum amplitude. Also, in the case where a signal is reproduced using a magnetic head such as a GMR head, by increasing a temperature of the recording film 18 with a light beam and the like, the transcribed magnetic domains can be expanded similarly in the reproduction layer 13, whereby a reproduction signal with a fixed maximum amplitude can be obtained.

On the other hand, in the conventional magnetic disks according to the DWDD technology, in order to make it easy to shift the domain walls in the reproduction layer into which magnetic domains are transcribed from the recording layer, there is a need to form a magnetic domain structure including not-closed domain walls by cutting of the exchanging coupling between tracks in the reproduction layer and moreover to carry out the stable recording even in a miniscule magnetic domain by using a recording layer having a coercive force larger than a driving force for the domain walls in the reproduction layer. In addition, in the case where the shape of the magnetic domains fluctuates, the deformed magnetic domain would be transcribed to the reproduction layer, causing a problem of the fluctuation of a reproduction signal.

The following describes a configuration of the magnetic disk 1 in Embodiment 1 of the present invention and a method for producing the same.

As shown in Fig. 1, on the disk substrate 11, the recording film 18 of a multilayered lamination structure including the above-described magnetic films is formed. In this disk substrate 11, a substantially rectangular shaped groove 2 is formed, and on either side of the groove 2, a land 3 is formed. A depth h of the groove 2 is 40 nm from a top face of the land portion 3. A track pitch of the magnetic disk 1 according to this embodiment is 0.7 $\mu$m and a width of the groove 2 is 0.5 $\mu$m.

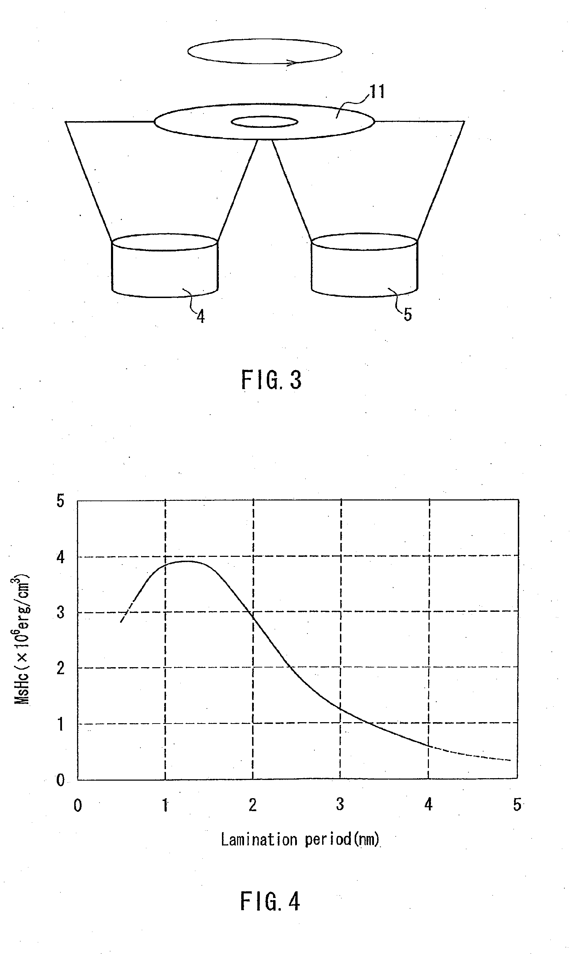

Fig. 3 explains the configuration of a sputtering apparatus for producing the recording layer 15 of this embodiment. Firstly, as shown in Fig. 3, a B-doped Si target (not illustrated) is installed in a chamber of a DC magnetron sputtering apparatus so as to oppose the transparent disk substrate 11 made of polycarbonate in which the groove 2 (Fig. 1) has been formed. Then, after the disk substrate 11 is fixed to a substrate holder (not illustrated), the chamber is evacuated to a high vacuum of $8 \times 10^{-6}$ Pa or less with a turbo molecular pump. Then, while continuing the evacuation, Ar gas and $N_2$ gas are introduced into the chamber so as to reach 0.3 Pa. Next, while the disk substrate 11 is rotated in the direction shown by the arrow, SiN is formed as the dielectric layer 12 (Fig. 1) so as to have a thickness of 40 nm by reactive sputtering.

Subsequently, while continuing the evacuation similarly, the reproduction layer 13 (Fig. 1) made of Gd-FeCoAl is formed on the dielectric layer 12 so as to have a thickness of 30 nm. This layer is formed by introducing Ar gas into the chamber so as to reach 0.5 Pa and by carrying out the DC magnetron sputtering using each of the targets Gd, Fe, Co and Al while rotating the disk substrate 11. Next, Ar gas is introduced into the chamber so as to reach 1.8 Pa, and the intermediate cut-off layer 14 (Fig. 1) containing TbDyFeCo is formed so as to have a thickness of 15 nm using each of the targets Tb, Dy, Fe and Co.

Next, after Ar gas is introduced into the chamber so as to reach 1.5 Pa, the recording layer 15 (Fig. 1) is formed by the DC magnetron sputtering so as to have a thickness of 60 nm using a Tb target 4 and a FeCo target 5 so that Tb and FeCo are laminated periodically. Here, the composition of the TbFeCo film can be adjusted as desired by adjusting an introduction power ratio of the respective targets 4 and 5. In this process, partial pressures of $O_2$, $H_2O$, $N_2$ and $H_2$ with respect to the Ar gas pressure in the chamber are 10 ppm, 30 ppm, 40 ppm and 35 ppm, respectively, with respect to the film deposition pressure.

Next, Ar gas and $N_2$ gas are introduced into the chamber so as to reach 0.3 Pa, and the dielectric layer 16 (Fig. 1) made of SiN is formed by the reactive sputtering so as to have a thickness of 70 nm while rotating the disk substrate 11.

Then, an epoxy acrylate based resin is dropped on the dielectric layer 16, followed by the spin coating so as to apply the same to have a thickness of 6 $\mu$m. Then, the resin is cured by the irradiation with a UV lamp so as to form the protective coating layer 17 (Fig. 1).

Here, the reproduction layer 13 containing Gd-FeCoAl has a compensation composition temperature of 150°C and a Curie temperature of 270°C. The intermediate cut-off layer 14 containing TbDyFeCo has a Curie temperature of 150°C, and under the Curie temperature, rare-earth metal compositions are always predominant. The recording layer 15 containing TbFeCo is deposited by setting the introduction power of the respective targets for adjusting the film composition so that the recording layer 15 has a compensation composition temperature of 80°C and a Curie temperature of 310°C.

The method for producing the recording layer 15 will be described below more specifically. As shown in Fig. 3, this method employs the Tb target 4 and the FeCo target 5, where Ar gas is introduced into the chamber so as to reach 1.5 Pa. Then, the recording layer 15 is formed with a thickness of 60 nm by the DC magnetron sputtering so that Tb and FeCo are laminated periodically.

Here, at the time of the deposition of the Tb-FeCo film as the recording layer 15, by controlling the film deposition rate and the rotation speed of the disk substrate 11, a magnetic thin film of an amorphous film structure having a periodic lamination structure with the transition metals of Tb, Fe and Co each having a thickness of 1.5 nm can be formed. More specifically, the above-stated film structure can be obtained by depositing the respective films at the film deposition rate of 0.7 nm/sec of the respective elemental particles while disk substrate 11 rotates at 40 rpm. In addition, the composition of the TbFeCo film can be adjusted as desired by adjusting an introduction power ratio of the respective targets.

Such a periodic lamination structure of the recording layer 15 at a period of 2.0 nm or less allows the product of the saturation magnetization Ms and the coercive force Hc of the recording layer 15 to be increased, so as to obtain the Ms·Hc of $3.0 \times 10^6$ erg/cm$^3$ or more.

Actually, the recording layer 15 according to this embodiment realized a Ms·Hc value as large as $4.2 \times 10^6$ erg/cm$^3$, whereby magnetic domains can be formed stably even in the case where miniscule magnetic domains of 70 nm or less are recorded in the recording layer 15, and recording and reproducing can be accomplished with an excellent signal property even in the case of repeatedly conducted recording and reproducing.

In this embodiment, the degree of vacuum during the film deposition of the recording layer 15 reaches $8 \times 10^{-6}$ Pa, and the partial pressures of $O_2$, $H_2O$, $N_2$ and $H_2$ with respect to the Ar gas pressure in the chamber are 10 ppm, 30 ppm, 40 ppm and 35 ppm, respectively, for the film deposition pressure. If the amounts of impurity gases in the chamber increase, these gases are incorporated into the recording layer 15, which leads to a tendency of a decrease in Ms·Hc. On the contrary, in the case of this embodiment, where the degree of vacuum during the film deposition of the recording layer 15 reaches $1 \times 10^{-5}$ Pa or less, and the partial pressures of $O_2$, $H_2O$, $N_2$ and $H_2$ with respect to the Ar gas pressure in the chamber are 100 ppm or less, the Ms·Hc will increase.

Here, Fig. 4 shows the dependence of the Ms·Hc on the period of the lamination structure of the recording layer 15 that is formed in the magnetic recording medium according to Embodiment 1. As shown in Fig. 4, the Ms·Hc of the recording layer 15 increases remarkably when the lamination period of the recording layer 15 is 2.0 nm or less, and reaches its peak in the lamination structure with a period of about 1.0 nm. Therefore, in order to obtain the Ms·Hc value of $3.0 \times 10^6$ erg/cm$^3$ or more, a lamination period of 2.0 nm or less is desirable as shown in Fig. 4.

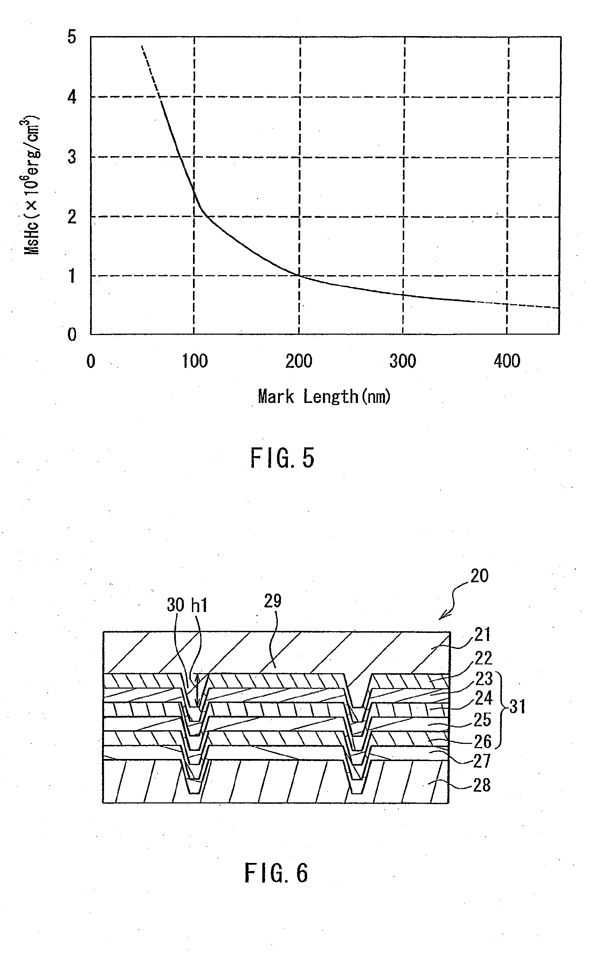

Next, Fig. 5 shows the dependence of the recording limit of the recording mark length on the Ms·Hc of the recording layer 15 that is formed in the magnetic recording medium according to Embodiment 1. As shown in Fig. 5, as the Ms·Hc of the recording layer 15 increases, the recording mark length as the recording limit can be shortened. In Embodiment 1, since the recording layer 15 has the periodic lamination structure, miniscule magnetic domains formed in the recording layer 15 have excellent stability. When the Ms·Hc value of the recording layer 15 is $3.0 \times 10^6$ erg/cm$^3$ or more, recording and reproducing can be accomplished with stability even in the case of magnetic domains with a mark length of 80 nm or less. For that reason, when a recording film compliant with the DWDD technology is used also, magnetic domains can be transcribed to the reproduction layer 13 with stability, and domain walls in the reproduction layer 13 can shift easily, which leads to the expansion of the amplitude of a signal, thus obtaining an excellent recording/reproducing signal.

In the magnetic disk 1 according to Embodiment 1, the rectangular land 3 and the groove 2 are formed. With the configuration where a portion between the recording tracks is subjected to annealing or that includes the land 3 provided with a deep groove 2, the tracks for recording information can be separated magnetically from each other. As a result, the domain walls of the magnetic domains transcribed in the reproduction layer can shift easily, thus enabling the above-stated recording/reproducing according to the DWDD technology.

In addition, the magnetic disk 1 according to Embodiment 1 has the configuration in which the land 3 separates the grooves 2 that include the not-closed domain wall and information is recorded in the grooves 2. However, the present invention is not limited to this configuration. The same properties can be obtained in the configuration in which information is recorded in the land 3 or in which information is recorded in both of the land 3 and groove 2.

Furthermore, although the track pitch is 0.7 μm in the magnetic disk 1 according to Embodiment 1, the configuration in which the width of the groove 2 for recording information is 0.6 μm or less and the shortest mark length of the recorded information is 0.5 μm or less, preferably, 0.3 μm, enhances the effect.

As stated above, with the configuration of Embodiment 1, a stable reproduction signal properties can be obtained in accordance with the DWDD technology, even when information is recorded at a high density.

Note here that the recording layer 15 that is formed in the magnetic recording medium 1 according to Embodiment 1 has the configuration of a lamination structure in which Tb and FeCo are laminated periodically with a thickness of 1.5 nm. However, this embodiment is not limited to thus described structure. The equivalent effects can be obtained with a lamination structure with a lamination period between 0.4 nm and 2 nm, inclusive, where the thickness of the recording layer 15 is 50 nm or more, preferably, between 60 nm and 200 nm, inclusive.

In addition, Embodiment 1 deals with the configuration in which transition metals of Tb and Fe, Co are laminated periodically based on the Tb target 4 and the FeCo target 5. However, Tb, Fe and Co may be laminated based on different targets. Furthermore, even in the configuration containing materials other than Tb, Fe and Co, the recording layer may be configured so as to have a lamination period of 2 nm or less.

As stated above, according to Embodiment 1, the laminated periodic structure in which recorded information is rewritable allows the expansion of the Ms·Hc of the recording layer 15. Therefore, miniscule magnetic domains of 0.3 μm or less can be formed with stability, and domain walls can shift easily. As a result, a reproduction signal that is expanded due to the shift of transcribed magnetic domains in accordance with the DWDD technology can be obtained. In addition, magnetic domains in the information track can be formed with a stable shape, so that crosswrite and crosstalk from the adjacent tracks can be reduced during the recording and reproducing.

*Embodiment 2*

The following specifically describes Embodiment 2 of the present invention, with reference to the drawings.

Fig. 6 is a cross-sectional view showing a configuration of a magnetic disk 20 of Embodiment 2 of the present invention. The magnetic disk 20 is equipped with a disk substrate 21 made of polycarbonate. On the disk substrate 21, grooves 29 are formed so as to make up tracks that are provided in proximity in a row arrangement in the width direction. At a boundary between the respective groves 29, an inverted V-shaped land 30 is formed so as to separate the tracks for recording information.

One example of a configuration of a format system according to Embodiment 2 will be described below. In the groove 29, a rewritable region and a pit region are alternately provided on tracks in proximity in a row arrangement, where the pit region is provided with a wobble pit for servo and an address pit. By performing tracking servo with the format configuration such as a sample servo method, an address can be detected from the pit region and information can be recorded/reproduced with respect to the rewritable region.

At this time, assuming that a laser light wavelength is $\lambda$, the configuration in which pre-pits and grooves have depths in the range of $\lambda/20n$ to $\lambda/3n$ or 20 nm to 180 nm enables the detection of pre-pits such as address pits. Moreover, information recorded in the groove can be recorded/reproduced in accordance with the DWDD technology that utilizes the magnetic cut-off between the tracks.

On the transparent optical disk substrate 21 made of polycarbonate that is formed in the magnetic recording medium 20 according to Embodiment 2, a dielectric layer 22 is formed for protecting a recording film 31 and for adjusting optical properties of the magnetic recording medium 20.

The recording film 31 is formed on the dielectric layer 22. This recording film 31 is made up of four layers including: a reproduction layer 23 formed for detecting information by making use of the shift of domain walls; a control layer 24 for reducing ghost signals; an intermediate cut-off layer 25 for controlling the exchange coupling between the reproduction layer 23 and a recording layer 26; and the recording layer 26 for holding the information. On the recording layer 26, a dielectric layer 27 is formed for protecting the recording film 31 and on the dielectric layer 27, a protective coating layer 28 is formed.

Similarly to the above-described Embodiment 1, in the magnetic recording medium 20 according to Embodiment 2, such a configuration enables the super-resolution reproduction beyond the detection limit that is determined by the wavelength of an optical beam for reproduction and a numerical aperture of an objective lens by making a domain wall shift sequentially, when the domain wall comes closer to the optical beam for reproduction, and detecting the shift of this domain wall.

A depth h1 of the groove 29 is 45 nm from a top face of the land 30. The groove 29 is magnetically independent of the track formed in the adjacent groove 29 by virtue of the land 30. A track pitch of the magnetic disk 20 according to Embodiment 2 is 0.6 $\mu$m and a width of the groove is 0.45 $\mu$m.

The magnetic recording medium 20 configured as above is manufactured as follows. Firstly, a $ZiS \cdot SiO_2$ target is installed above the transparent disk substrate 21 made of polycarbonate as shown in Fig. 6, in which the grooves 29 have been formed. Then, the disk substrate 21 is fixed to a substrate holder. Thereafter, a chamber is evacuated to a high vacuum of $6 \times 10^{-6}$ Pa or less with a cryopump. Then, while continuing the evacuation, Ar gas is introduced into the chamber so as to reach 0.5 Pa. Then, while the disk substrate 21 is rotated, a $ZiS \cdot SiO_2$ film is deposited as the dielectric layer 22 by the high-frequency sputtering so as to have a thickness of 80 nm.

Next, in order to form the reproduction layer 23 made of GdFeCoCr on the dielectric layer 22, while continuing the evacuation similarly, Ar gas is introduced into the chamber so as to reach 0.6 Pa, and while the disk substrate 21 is rotated, films are deposited sequentially in a thickness of 10 nm using alloy targets having compositions of $Gd_{25}Fe_{60}Co_{11}Cr_4$, $Gd_{24}Fe_{58}Co_{10}Cr_8$ and $Gd_{23}Fe_{55}Co_9Cr_{13}$ (the compositions are represented by mol%).

Next, the control layer 24 made up of TbFeCoCr and the intermediate cut-off layer 25 made up of TbDyFeCr are sequentially formed by the DC magnetron sputtering to have thicknesses of 10 nm and 15 nm, respectively.

Next, the recording layer 26 made up of TbFeCoCr is formed so as to have a thickness of 100 nm by introducing Kr gas so as to reach 2.6 Pa and conducting the DC sputtering by alternately using a $Tb_{22}Fe_{58}Co_{18}Cr_2$ target and a $Tb_{27}Fe_{53}Co_{20}$ target so as to laminate magnetic films having different compositions periodically.

Thereafter, Ar gas is introduced into the chamber so as to reach 0.6 Pa, and while the disk substrate 21 is rotated, the dielectric layer 27 made of $ZiS\text{-}SiO_2$ is formed by the high-frequency sputtering so as to have a thickness of 100 nm.

Thereafter, on the dielectric layer 27, an epoxy acrylate based resin is applied by spin coating, and then, the resin is cured by the irradiation with UV rays so as to form the protective coating layer 28.

Here, particularly, the reproduction layer 23 according to Embodiment 2 is made up of three magnetic layers having different compositions. That is to say, the reproduction layer 23 of GdFeCoCr is made up of a magnetic layer having a compensation composition temperature of 160°C and a Curie temperature of 230°C, a magnetic layer having a compensation composition temperature of 140°C and a Curie temperature of 200°C, and a magnetic layer having a compensation composition temperature of 120°C and a Curie temperature of 170°C.

The control layer 24 of TbFeCoCr has a Curie temperature of 160°C, and under the Curie temperature, transition metal compositions are always predominant in the control layer 24. The intermediate cut-off layer 25 of TbDyFeCr has a Curie temperature of 145°C, and under the Curie temperature, transition metal compositions are always predominant in the control layer 24.

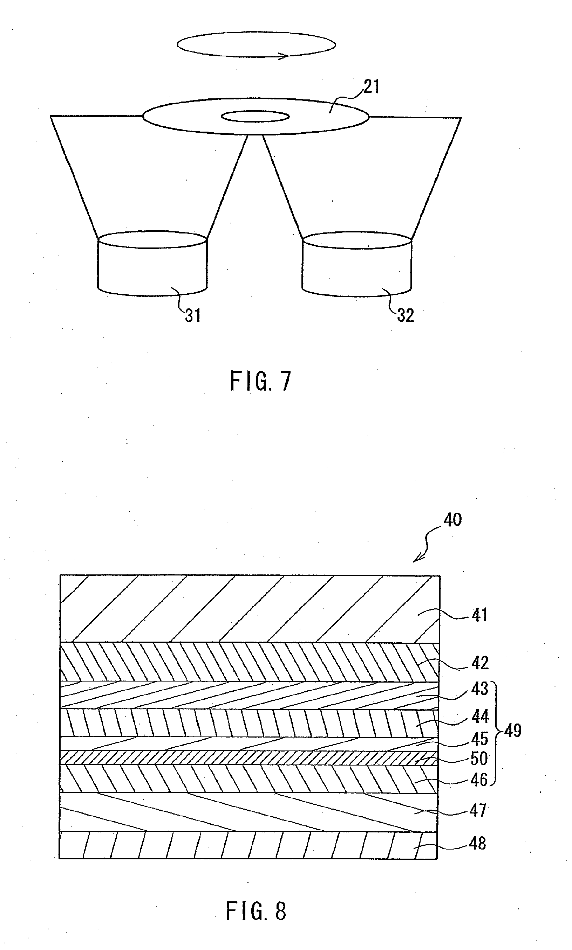

In addition, the recording layer 26 of TbFeCoCr is formed by sputtering while holding the disk substrate 21 onto the substrate holder (not illustrated) that is arranged in the vacuum chamber so as to oppose a rare-earth rich target 31 and a transition metal rich target 32 for the recording layer 26, as in Fig. 7, which shows the configuration of a film deposition apparatus for the magnetic recording medium. On the disk substrate 21, the dielectric layer 22, the reproduction layer 23, the control layer 24 and the intermediate cut-off layer 25 are laminated, and then the recording layer 26 is formed based on the rare-earth rich target 31 and the transition metal rich target 32 shown in Fig. 7, while the substrate holder is rotated in the direction shown by the arrow. After the completion of the formation of the recording layer 26, the disk substrate 21 travels to another vacuum chamber (not illustrated) by means of a vacuum transfer mechanism, together with the substrate holder, where the dielectric layer 27 further is formed. In addition, on rear faces of the rare-earth rich target 31 and the transition metal rich target 32, cathodes with a magnet disposed thereto are provided, and electric power is supplied to these cathodes for the recording layer 26 from a DC power supply, whereby the recording layer 26 is formed by the DC magnetron sputtering method.

The configuration of the magnetic thin film in the recording layer 26 of TbFeCoCr can be changed by controlling a Kr gas pressure during the film deposition, the film deposition rate and the rotation speed of the disk substrate 21 that is held to the substrate holder. Specifically, the recording layer 26 of TbFeCoCr can be formed to have a thickness of 100 nm having a periodic lamination structure with a period of 1.0 nm by setting the rotation speed of the disk substrate 21 at 80 rpm, the Kr gas pressure during the film deposition at 2.6 Pa and the film deposition rate for depositing the film by alternately using the targets 31 and 32 for $Tb_{22}Fe_{58}Co_{18}Cr_2$ and $Tb_{27}Fe_{53}Co_{20}$, respectively. Here, although the rare-earth composition and the transition metal composition alternately are laminated in the recording layer 26, the overall film composition of the recording layer 26 is adjusted to present a compensation composition temperature of 100°C and a Curie temperature of 270°C.

At this time, by introducing Kr gas during the film deposition and making the recording layer 26 have the periodic laminated configuration of TbFeCoCr films with different compositions, Ms·Hc of the recording layer 26 can be increased.

In fact, the recording layer 26 according to Embodiment 2 realized Ms·Hc of $3.8 \times 10^6$ erg/cm$^3$, whereby magnetic domains can be formed stably even in the case that miniscule magnetic domains are recorded, and recording and reproducing can be accomplished with an excellent signal property even in the case of repeatedly conducted recording and reproducing.

In addition, since the recording layer 26 having the periodic laminated configuration according to Embodiment 2 has excellent stability of the miniscule magnetic domains, recording and reproducing can be accomplished with stability even in the case of magnetic domains with a mark length of 80 nm or less. For that reason, when a recording film compliant with the DWDD technology is used also, magnetic domains can be transcribed to the reproduction layer 23 from the recording layer 26, and domain walls can shift easily, which leads to the expansion of the amplitude of a signal, thus obtaining an excellent recording/reproducing signal. In fact, in Embodiment 2, the transcription could be accomplished into the reproduction layer 23 with stability even in the case of the magnetic domains with a mark length of 95 nm, and the domain walls could shift for reproduction. Therefore, the reproduction could be accomplished with the domain walls expanded, so that jitter of 12% or less could be obtained. When a signal is recorded at a linear velocity of 2.4 m/s by the optical pulse magnetic field modulation recording method, the jitter becomes a minimum at a reproduction power of 3.6 mW, and a reproduction jitter hardly changes within the reproduction power of ±20%, so that it can be found that sufficiently favorable reproduction signal properties can be obtained.

Note here that, in Embodiment 2, deposition is conducted by alternately using the respective targets for $Tb_{22}Fe_{58}Co_{18}Cr_2$ and $Tb_{27}Fe_{53}Co_{20}$ so as to form a film with a periodic configuration of 1.0 nm. However, the present invention is not limited to this example, and the same effects can be obtained by making a periodic laminated configuration having a period of 2.0 nm or less by means of a configuration using targets for the recording layer having a plurality of compositions each required. As a result, it could be confirmed that the recording/reproducing could be accomplished up to the mark length of 90 nm or less.

Here, the Ms·Hc of the recording layer 26 is changed depending on the evacuation speed during the film deposition, the Kr flow rate and the pressure, where the evacuation speed of $1 \times 10^{-5}$ Pa or less, preferably, $8 \times 10^{-6}$ Pa or less and the Kr pressure during the film deposition between 0.5 Pa and 4.5 Pa, inclusive, exert the equivalent effects as above. In addition, at this time, with consideration given to the capacity of the vacuum pump, a larger flow rate of Kr is favorable, and it is preferable to introduce it at least at 20 sccm or more. In this process, Kr atoms are incorporated between the configuration units of the recording film, thus exerting an effect of increasing the Ms·Hc of the recording layer 26.

Furthermore, in terms of the Ms·Hc of the recording layer 26 with respect to the film deposition rate of the magnetic film during the film deposition, the film deposition rate of 20 nm/sec or less allows the film to be formed so as to increase the Ms·Hc. However, when the film deposition rate is less than 1 nm/sec, it would take a long time to deposit the film and the magnetic properties of the recording film deteriorate so that the rare-earth metals are decreased, so that the amount of a reproduction signal from the groove 29 is decreased sharply. To avoid this, the film deposition rates of 2 nm/sec to 20 nm/sec, inclusive, preferably, of 4 nm/sec to 10 nm/sec, inclusive, are preferable, which are obtained by adjusting the introduction power and adjusting the film thickness/film distribution correction board and the like during the manufacturing of the recording layer 26.

As stated above, although the critical minimum mark length of the recording layer 26 depends on the vertical magnetic anisotropy, when the product of the saturated magnetization and the coercive force of the recording layer 26 (the product of Ms·Hc) is set at $3.0 \times 10^6$ or more as in Embodiment 2, then recording and reproducing can be accomplished at a mark length of 90 nm or less.

In addition, in order to increase the above-stated product of Ms·Hc of the recording layer 26, it is effective to increase the contents of Kr atoms (or an inert gas such as Ar and Xe) in the recording layer 26. Specifically, when the Kr contents in the recording layer 26 are detected by EPMA (electron probe microanalysis), RBS (Rutherford backscattering spectroscopy) or the like, the configuration containing Kr (or Ar, Xe) of 0.5 mol% to 4.0 mol%, inclusive, can exert the equivalent effects.

Therefore, in order to enhance the signal properties of the magnetic recording medium in accordance with the DWDD technology, it can be found that if the recording layer 26 has a periodic laminated configuration with a period of 2 nm or less, preferably with a period of 1.5 nm or less, the sufficient stable magnetic anisotropy along the vertical direction of a film surface can be obtained even in the case of recording a short mark of 90 nm or less, and the equivalent high density recording/reproducing can be accomplished. However, when the period of the periodic laminated configuration is decreased to less than 0.2 nm, the magnetic anisotropy along the direction perpendicular to the film surface decreases.

In addition, as for the properties of the recording layer 26 according to Embodiment 2 having the periodic laminated configuration with a period of 1.0 nm, jitter during the reproduction of a signal becomes the minimum at a film thickness of the recording layer 26 in a range of 100 nm to 180 nm. Although the optimum value of the thickness of the recording layer 26 varies with the film composition and the magnetic properties of the recording layer 26, when the thickness is increased relatively, its recording/reproducing properties are improved. It can be found that the thickness of the recording layer between 40 nm and 300 nm, inclusive, preferably between 80 nm and 200 nm, inclusive, allows the formation of stable magnetic domains, even in the case of a short mark of 90 nm or less, and the transcription can be conducted with stability into the reproduction layer for reproduction.

As stated above, Embodiment 2 has the configuration in which a magnetic film that enables recording/reproducing using the DWDD technology is included, a boundary between a track region in which recorded information is rewritable and an adjacent track is cut off magnetically, and the recording layer 26 has a periodic laminated configuration, specifically, a periodic laminated configuration with a period of 2 nm or less, preferably, of 1.5 nm or less. With this configuration, even in the case of a short mark length, particularly, with a minimum mark length of 90 nm or less as well, a reproduction signal can be expanded by the shift of transcribed magnetic domains in accordance with the DWDD technology.

In this way, the configuration of Embodiment 2 allows stable reproduction signal properties to be obtained even in the case of recording/reproducing at a high density in accordance with the DWDD technology.

*Embodiment 3*

The following specifically describes Embodiment 3 of the present invention, with reference to the drawings.

Fig. 8 is a cross-sectional view showing a configuration a magnetic recording medium 40 of Embodiment 3 of the present invention. The magnetic recording medium 40 is equipped with a disk substrate 41 containing polyolefin. On the disk substrate 41, tracks are formed in a groove form, which are provided in proximity in a row arrangement in the width direction, and an inversed V-shaped land is formed between the tracks so as to separate the tracks for recording information.

The magnetic recording medium 40 according to Embodiment 3 has a film configuration similar to that of the above-stated magnetic recording medium 20 according to Embodiment 2. On the transparent disk substrate 41 containing polyolefin, a dielectric layer 42 is formed for protecting a recording film 49 and for adjusting optical properties of the magnetic recording medium 40. On the dielectric layer 42, the recording film 49 is formed. The recording film 49 includes: a reproduction layer 43 for detecting information by making use of the shift of domain walls; a control layer 44 for reducing ghost signals; an intermediate cut-off layer 45 for controlling the exchange coupling between the reproduction layer 43 and a recording layer 46; and the recording layer 46 for holding the information. On the recording layer 46, a dielectric layer 47 for protecting the recording film 49 and a protective coating layer 48 are formed sequentially.

Similarly to the magnetic recording medium 1 according to Embodiment 1, the magnetic recording medium 40 shown in Fig. 8 according to Embodiment 3 can be used for a magnetic recording medium that enables the super-resolution reproduction that is beyond the detection limit determined by the wavelength of an optical beam for reproduction and a numerical aperture of an objective lens by making a domain wall shift sequentially along the direction parallel to a surface of the reproduction layer 43, when the domain wall comes closer to the optical beam for reproduction, and detecting the shift of this domain wall.

The magnetic disk 40 according to Embodiment 3 is formed by depositing a multilayered film including such a magnetic layer on the disk substrate 41. A land is formed between the grooves, and a depth of the grooves is 75 nm from a top face of the land. The land has an inversed V-shape. This land allows the grooves to be magnetically independent of one another. A track pitch of the magnetic disk 40 according to Embodiment 3 is 0.5 $\mu$m and a width of the groove is 0.4 $\mu$m.

Similarly to the magnetic recording medium 20 according to Embodiment 2, the thus configured magnetic recording medium 40 is manufactured by forming a thin film on the disk substrate 41 that is arranged so as to oppose a target.

Firstly, the dielectric layer 42 made up of SiN is deposited on the disk substrate 41 by reactive sputtering so as to have a thickness of 80 nm. Then, the recording film 49 is deposited by the DC magnetron sputtering using alloy targets. Specifically, the reproduction layer 43 containing GdFeCoCr is deposited sequentially in a thickness of 10 nm using four types of alloy targets including the compositions of $Gd_{26}Fe_{59}Co_{11}Cr_4$, $Gd_{25}Fe_{57}Co_{10}Cr_8$, $Gd_{24}Fe_{54}Co_9Cr_{13}$ and $Gd_{23}Fe_{51}Co_8Cr_{18}$ (the compositions are represented by mol%). Next, the control layer 44 containing TbFeCo and the intermediate cut-off layer 45 containing TbFeAl are deposited sequentially by the DC magnetron sputtering using alloy targets so as to have thicknesses of 5 nm and 10 nm, respectively.

Here, in the magnetic recording medium 40 according to Embodiment 3, after the formation of the intermediate cut-off layer 45, a surface of the intermediate cut-off layer 45 is ion-etched in an atmosphere of Ar gas, so as to have a surface roughness Ra between 0.6 nm and 1.0 nm, inclusive.

Then, Kr gas is introduced and the recording layer 46 containing TbFeCo further is deposited thereon by the DC magnetron sputtering so as to have a thickness of 100 nm. On the recording layer 46, the dielectric layer 47 containing SiN is deposited by reactive sputtering so as to have a thickness of 80 nm. Then, on the dielectric layer 47, a urethane based resin further is applied by the spin coating, which is cured by the irradiation with UV rays so as to form the protective coating layer 48.

Here, the reproduction layer 43 of GdFeCoCr is made up of reproduction layers with four compositions, which include a layer having a compensation composition temperature of 190°C and a Curie temperature of 270°C; a layer having a compensation composition temperature of 155°C and a Curie temperature of 220°C; a layer having a compensation composition temperature of 110°C and a Curie temperature of 170°C; and a layer having a compensation composition temperature of 80°C and a Curie temperature of 130°C. In this process, the Ar pressure during the film deposition is 0.8 Pa and the film deposition rate is 13 nm/sec.

The control layer 44 of TbFeCo has a Curie temperature of 165°C, and under the Curie temperature, transition metal compositions are always predominant in the control layer 44, which is deposited at the Ar gas pressure of 2.5 Pa and the film deposition rate of 4 nm/sec. The intermediate cut-off layer 45 of TbFeAl has a Curie temperature of 150°C, and under the Curie temperature, rare-earth metal compositions are always predominant in the intermediate cut-off layer 45, which can be formed at the Ar gas pressure during the film deposition of 2.0 Pa and the film deposition rate of 5 nm/sec.

The recording layer 46 of TbFeCo is a magnetic film whose composition is adjusted so that a compensation composition temperature is 30°C and a Curie temperature is 290°C. The magnetic film can be formed at the pressure of Kr gas during the film deposition of 3.5 Pa and the film deposition rate of 5 nm/sec.

In the above-stated configuration of the magnetic recording medium 40, the surface of the intermediate cut-off layer 45 formed on the disk substrate 41 is subjected to plasma etching so as to form an etching layer 50. Then, by forming the recording layer 46 on the etching layer 50 and by using Kr gas for depositing the recording layer 46, Ms·Hc of the recording layer 46 can be increased.

Actually, the recording layer 46 according to Embodiment 3 realized a Ms·Hc value of $3.5 \times 10^6$ erg/cm³, whereby magnetic domains can be formed stably even in the case that miniscule magnetic domains are recorded, and recording and reproducing can be accomplished with an excellent signal property even in the case of repeatedly conducted recording and reproducing.

In Embodiment 3, the surface roughness Ra of the intermediate cut-off layer 45 is set between 0.6 nm and 1.0 nm, inclusive. However, Ra of 0.5 nm or more can exert an effect of increasing the coercive force of the recording layer, whereby a large Ms·Hc can be obtained.

In addition, since the magnetic recording medium 40 according to Embodiment 3 employs a static opposed type sputtering system, the film can be deposited without a change in the direction of sputtering particles, as compared with the case where a film is deposited while the disk substrate 41 and the like are rotated. Therefore, the uniformity of the composition of the recording film 49 can be obtained corresponding to the distribution of the target composition, and the magnetic films can be deposited and grown in the vertical direction. Thereby, an effect of the surface shape at the time of the deposition of the recording layer 46 can be utilized effectively, and an increased effect can be obtained.

Furthermore, also when a recording film that enables recording/reproducing in accordance with the DWDD technology is employed, the cycle time for the manufacturing can be shortened, which means an increase in productivity, and a magnetic recording medium with excellent signal properties during the high-density recording can be realized.

Moreover, with a groove shape using the land or with a structure having the magnetically cut-off region by means of laser annealing and the like, an overwrite power margin during the overwriting for rewriting an information signal can be expanded. Particularly, since the disk substrate containing polyolefin can be shaped by utilizing an excellent transcription capability, the coupling between adjacent tracks in a groove as the recording/reproducing region can be securely disconnected, which leads to an increased effect. Additionally, when the surface roughness of the land or a tilt portion of the land is increased by plasma etching, the magnetic properties in the recording track correspondingly can be changed, and therefore, disconnection between the recording tracks can be secured. At this time, in a disk substrate with a track pitch of 0.5 $\mu$m, a groove width of 0.4 $\mu$m and a height of a land relative to a groove of 75 nm, the surface roughness of the groove can be set at 1.5 nm or less.

As stated above, according to the magnetic recording medium of Embodiment 3, at least before the formation of the recording layer 46, the intermediate cut-off layer 45 is subjected to the plasma etching, and then the recording layer 46 is deposited in an atmosphere of Kr gas. In a more specific configuration with the recording layer 46 formed to have a surface roughness of 0.5 nm or more and a film thickness of 50 nm or more, preferably, between 60 nm and 200 nm, inclusive, excellent stability of the magnetic domains and excellent reproduction signal properties even in the case of a short mark length can be obtained.

*Embodiment 4*

The following specifically describes Embodiment 4 of the present invention, with reference to the drawings.

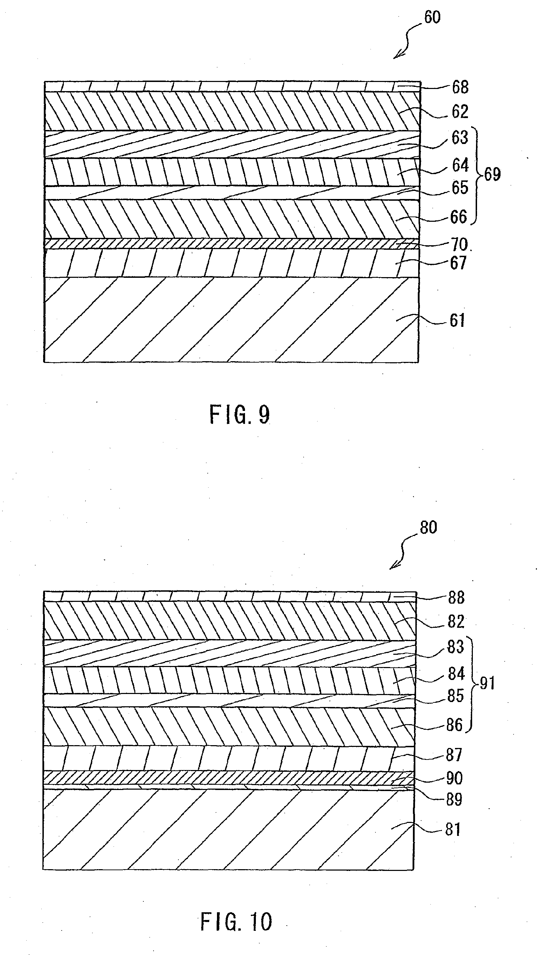

Fig. 9 is a cross-sectional view showing a configuration of a magnetic recording medium 60 according to Embodiment 4 of the present invention. The magnetic recording medium 60 is equipped with a disk substrate 61 containing polycarbonate. In tracks that are provided in proximity in a row arrangement in the width direction on the disk substrate 61, grooves are formed, and a rectangular land is formed at a boundary between the grooves so as to separate the tracks for recording information.

The magnetic recording medium 60 according to Embodiment 4 has a configuration in which a recording film has an inversely laminated structure with respect to that of the magnetic recording medium 1 according to Embodiment 1.

On the transparent disk substrate 61 containing polycarbonate, a dielectric layer 67 is formed. On the dielectric layer 67, a recording film 69 is formed. The recording film 69 includes: a recording layer 66 for holding information; an intermediate cut-off layer 65 for controlling the exchange coupling between a reproduction layer 63 and the recording layer 66; a control layer 64 for reducing a ghost signal; and the reproduction layer 63 for detecting information by making use of the shift of domain walls. On the reproduction layer 63, a dielectric layer 62 is formed for protecting the recording film 69 and for adjusting optical properties of the magnetic recording medium 60. In addition, on the dielectric layer 62, a sliding coating layer 68 having a lubricant is formed.

The magnetic recording medium 60 according to Embodiment 4 is different from the magnetic recording medium 1 according to Embodiment 1 in that an optical beam for reproduction is applied thereto so as not to pass through the disk substrate 61. However, similarly to the magnetic recording medium 1 according to Embodiment 1, the magnetic recording medium 60 according to Embodiment 4 allows the magnetic super-resolution reproduction that is beyond the detection limit determined by the wavelength of an optical beam for reproduction and a numerical aperture of an objective lens by making a domain wall in the reproduction layer 63 shift sequentially along the direction parallel to a surface of the reproduction layer 63, when the domain wall comes closer to the optical beam for reproduction, and detecting the shift of this domain wall.

The magnetic disk 60 according to Embodiment 4 is formed by depositing a multilayered film including such a magnetic layer on the disk substrate 61. A land is formed between the grooves, and a depth of the grooves is 50 nm from a top face of the land. The land has a rectangular shape. This land allows the grooves to be magnetically independent of one another. A track pitch of the magnetic disk 60 according to Embodiment 4 is 0.55 $\mu$m and a width of the groove is 0.45 $\mu$m.

Similarly to Embodiment 3, the magnetic recording medium 60 is manufactured by forming a thin film on the disk substrate 61 that is arranged so as to oppose a target.

Firstly, the dielectric layer 67 containing SiN is deposited on the disk substrate 61 by the reactive sputtering so as to have a thickness of 50 nm. Here, in the magnetic recording medium 60 according to Embodiment 4, a surface of the dielectric layer 67 of SiN is subjected to ion etching by irradiation with Ar ions using an Ar ion source so as to form an etching layer 70 having a surface with a surface roughness Ra of 0.7 nm.

The magnetic film 69 further is formed thereon by the DC magnetron sputtering using alloy targets. Firstly, after the evacuation to $7 \times 10^{-6}$ Pa or less, followed by the introduction of Kr gas, the recording layer 66 containing TbFeCo is formed by the DC magnetron sputtering so as to have a thickness of 100 nm. On the recording layer 66, the intermediate cut-off layer 65 containing TbFeCr is formed with a thickness of 10 nm, the control layer 64 containing TbFeCo is formed with a thickness of 5 nm, and then the reproduction layer 63 containing GdFeCoCr is formed sequentially in a thickness of 20 nm using two types of alloy targets including the compositions of $Gd_{26}Fe_{59}Co_{10}Cr_5$ and $Gd_{23}Fe_{55}Co_7Cr_{15}$ (the compositions are represented by mol%). In this way, the recording film 69 is formed by the DC magnetron sputtering by sequentially using the alloy targets.

In addition, the dielectric layer 62 containing SiN is formed by the reactive sputtering so as to have a thickness of 60 nm. Then, on the dielectric layer 62, a solvent containing a lubricant made of alumina based fine particles is applied by the spin coating so as to form the sliding coating layer 68.

Here, the reproduction layer 63 of GdFeCoCr is made up of reproduction layers with two compositions, which include a layer having a compensation composition temperature of 190°C and a Curie temperature of 260°C; and a layer having a compensation composition temperature of 110°C and a Curie temperature of 180°C. In this process, the Ar pressure during the film deposition is 0.8 Pa and the film deposition rate is 10 nm/sec.

The control layer 64 of TbFeCo has a Curie temperature of 155°C, and under the Curie temperature, rare-earth metal compositions are always predominant in the control layer 64, which is deposited at the Ar gas pressure of 2.8 Pa and the film deposition rate of 4 nm/sec. The intermediate cut-off layer 65 of TbFeCr has a Curie temperature of 140°C, and under the Curie temperature, transition metal compositions are always predominant in the intermediate cut-off layer 65, which is formed at the Ar gas pressure during the film deposition of 2.5 Pa and the film deposition rate of 5 nm/sec.

The recording layer 66 of TbFeCo is a magnetic film whose composition is adjusted so that a compensation composition temperature is 30°C and a Curie temperature is 300°C. In this process, the pressure of Kr gas during the film deposition is 3.5 Pa and the film deposition rate is 2.5 nm/sec.

In the above-stated configuration of the magnetic recording medium 60, the recording layer 66 is formed on the etching layer 70 formed by increasing the surface roughness Ra of the dielectric layer 67 containing SiN formed on the disk substrate 61 to 0.7 nm by the Ar ion irradiation, and then during the film deposition of the recording layer 66, the pressure is increased by introducing Kr gas. Thereby, the incorporated amount of the Kr gas into the recording layer 66 is increased, which leads to an increase in Ms·Hc of the recording layer 66. Actually, the recording layer 66 according to Embodiment 4 realized a Ms·Hc value of $3.2 \times 10^6$ erg/cm$^3$, whereby magnetic domains can be formed stably even in the case that miniscule magnetic domains are recorded, and recording and reproducing can be accomplished with an excellent signal property even in the case of repeatedly conducted recording and reproducing.

As stated above, according to the magnetic recording medium 60 of Embodiment 4, the Ms·Hc of the recording layer 66 containing TbFeCo can be increased by adjusting the film deposition condition for Kr gas and the surface roughness Ra before the film deposition, so that a recording film that allows recording and reproducing in accordance with the DWDD technology can be realized.

In addition, since the magnetic recording medium 60 according to Embodiment 4 employs a sputtering system in which the sputtering is carried out on the disk substrate 61 that opposes the target, the recording film 69 can be deposited with sputtering particles directed in the vertical direction. Therefore, the uniformity of the composition of the recording film 69 can be obtained, the effect of the expansion of the Ms·Hc can be increased, and a magnetic recording medium with excellent signal properties during the high-density recording can be realized.

Moreover, with the configuration having the magnetically cut-off region by the formation of the land or laser annealing, an overwrite power margin during the overwriting for rewriting an information signal can be expanded.

Although Embodiment 4 deals with the recording/reproducing method using an optical beam, the present invention is not limited to this. Even when the recording/reproducing is carried out using a magnetic head such as a GMR head, or using an optical beam having a different wavelength, the equal or better effects can be obtained with the magneto-optical recording medium in accordance with the DWDD technology.

*Embodiment 5*

The following specifically describes Embodiment 5 of the present invention, with reference to the drawings.

Fig. 10 is a cross-sectional view showing a configuration of a magnetic recording medium 80 according to Embodiment 5 of the present invention. The magnetic recording medium 80 is equipped with a disk substrate 81 in which grooves and pits are formed with a photo-polymer in a substrate made of glass.

Here, the magnetic recording medium 80 according to Embodiment 5 has a configuration in which a recording film is laminated in the same direction as that of the above-stated magnetic recording medium 60 according to Embodiment 4.

On the transparent disk substrate 81 made up of the glass substrate in which the grooves and the pits are formed by curing the photo-polymer, a dielectric layer 87 is formed. On the dielectric layer 87, a recording film 91 is formed. The recording film 91 includes: a recording layer 86 formed for holding information, an intermediate cut-off layer 85 for controlling the exchange coupling between a reproduction layer 83 described later and the recording layer 86; a control layer 84 for reducing a ghost signal; and the reproduction layer 83 for detecting information by making use of the shift of domain walls. On the reproduction layer 83, a dielectric layer 82 for protecting the recording film 91 and for adjusting optical properties of the magnetic recording medium 80 and a sliding coating layer 88 having a lubricant are formed sequentially.

In the magnetic recording medium 80 according to Embodiment 5, similarly to the magnetic recording medium 60 according to Embodiment 4, an optical beam for reproduction is applied thereto so as not to pass through the disk substrate 81. However, this magnetic recording medium allows the super-resolution reproduction that is beyond the detection limit determined by the wavelength of an optical beam for reproduction and a numerical aperture of an objective lens by making a domain wall in the reproduction layer 83 shift sequentially along the direction parallel to a surface of the reproduction layer 83, when the domain wall comes closer to the optical beam for reproduction, and detecting the shift of this domain wall.

In addition, the above-stated configuration allows the recording/reproducing of information recorded on the magnetic recording medium 80 by means of a magnetic head such as a GMR head as well.

In this way, the magnetic disk 80 according to Embodiment 5 is formed by depositing a multilayered film including a magnetic layer on the disk substrate 81. A land is formed between the grooves formed in the disk substrate 81, and a depth of the grooves is 55 nm from a top face of the land. The land has an inversed V-shape. This land allows the grooves to be magnetically independent of one another. A track pitch of the magnetic disk 80 according to Embodiment 5 is 0.5 μm and a width of the groove is 0.4 μm. Also, pre-pits are formed in the disk substrate 81 so as to have address information.

Similarly to the above-described Embodiment 4, the magnetic recording medium 80 is manufactured by forming a thin film on the disk substrate 81 that is arranged so as to oppose a target.

Firstly, a photo-polymer is applied onto the disk substrate 81, and the photo-polymer is cured by irradiation with UV rays, while a stamper keeps intimate contact therewith. Then, the stamper is peeled off so as to form a photo-polymer layer (2P layer) 89 having grooves and pits on the disk substrate 81.

In addition, in the magnetic recording medium 80 according to Embodiment 5, a surface of the 2P layer 89 formed on the disk substrate 81 is subjected to dry etching by irradiation with Ar ions so as to form an etching layer 90 having a surface roughness Ra of 1.0 nm.

In this way, after the formation of the grooves and the pits on the disk substrate 81, followed by the surface treatment with Ar ions, the dielectric layer 87 containing SiN is formed by the reactive sputtering so as to have a thickness of 30 nm.

Furthermore, the recording film 91 is formed thereon by the DC magnetron sputtering using alloy targets. Firstly, the recording layer 86 containing TbFeCo is formed by introducing Xe gas, followed by the DC magnetron sputtering so as to have a thickness of 120 nm. On the recording layer 86, the intermediate cut-off layer 85 containing TbFeCoCr is formed to have a thickness of 10 nm, the control layer 84 containing TbFeCo is formed to have a thickness of 10 nm, and moreover the reproduction layer 83 containing GdFeCoCr is formed sequentially in a thickness of 12 nm using three types of alloy targets having the compositions of $Gd_{24}Fe_{53}Co_6Cr_{17}$, $Gd_{25}Fe_{57}Co_{10}Cr_8$ and $Gd_{26}Fe_{59}Co_{12}Cr_5$ (the compositions are represented by mol%). The respective layers included in the recording film 91 are sequentially deposited by the DC magnetron sputtering using the alloy targets.

Furthermore, the dielectric layer 82 containing SiN is formed by the reactive sputtering so as to have a thickness of 50 nm. Then, on the dielectric layer 82, a diluted lubricant made of alumina perfluoropolyether (PFPE) is applied by dipping so as to form the sliding coating layer 88.

Here, the reproduction layer 83 of GdFeCoCr is made up of reproduction layers with three compositions, which include a layer having a compensation composition temperature of 140°C and a Curie temperature of 200°C; a layer having a compensation composition temperature of 155°C and a Curie temperature of 240°C; and a layer having a compensation composition temperature of 190°C and a Curie temperature of 285°C. In this process, the Ar pressure during the film deposition is 0.8 Pa and the film deposition rate is 15 nm/sec.

The control layer 84 made of TbFeCo has a Curie temperature of 160°C, and under the Curie temperature, rare-earth metal compositions are always predominant in the control layer 84, which is deposited at the Ar gas pressure of 2 Pa and the film deposition rate of 3 nm/sec. The intermediate cut-off layer 85 of TbFeCoCr has a Curie temperature of 145°C, and has a composition so that the Curie temperature and the compensation composition temperature approximately agrees with each other. Under the temperature, rare-earth metal compositions are predominant, which is formed at the Ar gas pressure during the film deposition of 2 Pa and the film deposition rate of 4.5 nm/sec.

The recording layer 86 of TbFeCo is a magnetic film whose composition is adjusted so that a compensation composition temperature is 50°C and a Curie temperature is 310°C. In this process, the pressure of Xe gas during the film deposition is 1.5 Pa and the film deposition rate is 2.5 nm/sec.

In the above-stated configuration of the magnetic recording medium 80, on the etching layer 89 whose surface roughness Ra is increased to 1.0 nm by etching the photo-polymer formed on the disk substrate 81 with Ar ions, the SiN dielectric layer 87 and the recording layer 86 are formed and moreover during the film deposition of the recording layer 86, Xe gas is used, so that Ms·Hc of the recording layer can be increased corresponding to the incorporated amount of the Xe gas ions into the recording layer 86.

Actually, the recording layer 86 according to Embodiment 5 realized a Ms·Hc value of $3.9 \times 10^6$ erg/cm$^3$, whereby magnetic domains can be formed stably even in the case that miniscule magnetic domains are recorded, and recording and reproducing can be accomplished with an excellent signal property even in the case of repeatedly conducted recording and reproducing.

In addition, when the magnetic recording medium 80 according to Embodiment 5 employs an opposed type sputtering system, the film can be deposited without a change in the direction of sputtering particles. Therefore, the uniformity of the composition of the recording film 91 can be obtained corresponding to the distribution of the target composition, and an increased effect can be obtained. At the same time, the cycle time for the manufacturing can be shortened. Additionally, since the magnetic recording medium 80 according to Embodiment 5 has the increased surface roughness of the surface of the 2P layer 89 and employs the disk substrate 81 made of glass whose tilt is small and mechanical properties are excellent, equal or better effects can be obtained by using a magnetic head such as a GMR head as well.

As stated above, according to the magnetic recording medium 80 of Embodiment 5, an excellent magneto-optical recording medium can be realized, which has a magnetic film that enables reproduction using the DWDD technology, has excellent signal properties during the high-density recording by virtue of the recording layer 86 having a configuration with the expanded Ms·Hc, and moreover allows recording/reproducing of information signals to be repeated.

*Embodiment 6*

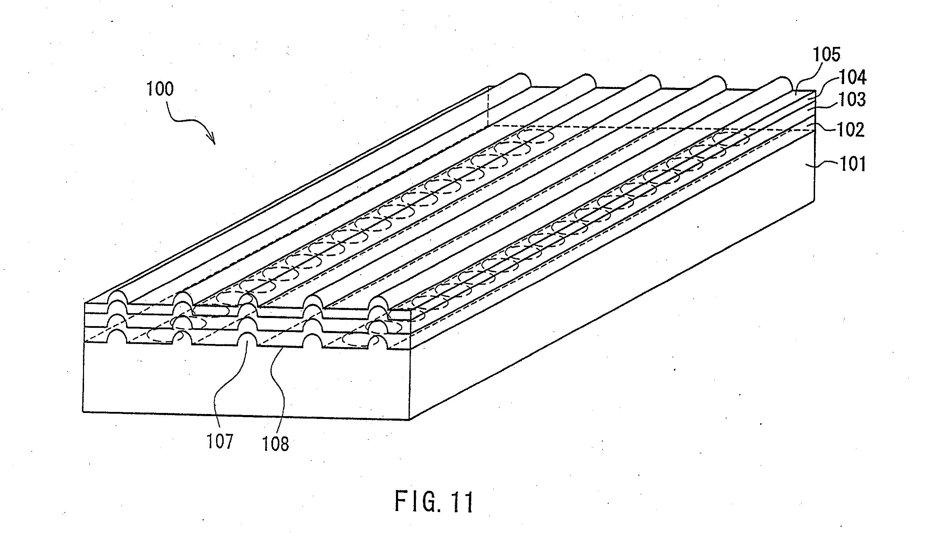

The following specifically describes Embodiment 6 of the present invention, with reference to the drawings. Fig. 11 is a perspective cross-sectional view showing a configuration of a magnetic recording medium 100 according to Embodiment 6 of the present invention. The magnetic recording medium 100 according to Embodiment 6 has a configuration in which layers are laminated sequentially from a recording layer, similarly to the above-described magnetic recording medium 80 according to Embodiment 5.

The magnetic recording medium 100 is equipped with a transparent disk substrate 101 made up of glass. In the disk substrate 101, grooves and pits are formed using a photo-polymer (2P). On the optical disk substrate 101, a dielectric layer 102 and a recording film 103 are formed in this stated order. The recording film 103 is formed by sequentially laminating a recording layer for holding information; an intermediate cut-off layer for controlling the exchange coupling between a reproduction layer and the recording layer; a control layer for reducing a ghost signal and the reproduction layer for detecting information by making use of the shift of domain walls. On the recording film 103, a dielectric layer 104 is formed for protecting the recording film 103 and for adjusting optical properties of the magnetic recording medium 100. On the dielectric layer 104, a sliding coating layer 105 is applied, which contains a lubricant in a UV cured resin.

In the magnetic recording medium 100 according to Embodiment 6, similarly to the above-described magnetic recording medium 60 according to Embodiment 4, an optical beam for reproduction is applied thereto so as not to pass through the disk substrate 101. However, this magnetic recording medium also allows the super-resolution reproduction that is beyond the detection limit determined by the wavelength of an optical beam for reproduction and a numerical aperture of an objective lens by making a domain wall in the reproduction layer shift sequentially along the direction parallel to a surface of the reproduction layer, when the domain wall comes closer to the optical beam for reproduction, and detecting the shift of this domain wall.

The magnetic recording medium 100 according to Embodiment 6 is formed by depositing a multilayered recording film 103 including the recording layer on such a disk substrate 101. A land is formed between the grooves formed in the disk substrate 101, and a depth of the grooves is 30 nm from a top face of the land. The land has an inversed U-shape. This land allows the grooves to be magnetically independent of one another. A track pitch of the magnetic recording medium 100 according to Embodiment 6 is 0.45 μm and a width of the groove is 0.4 μm. Also, a substantially circular pattern of 0.3 μm is formed on the entire surface in the grooves so as to form miniscule magnetic domains. In addition, pre-pits also are formed as required so as to have address information.

Similarly to the above-described Embodiment 4, the magnetic recording medium 100 is manufactured by forming a thin film on the disk substrate 101 that is arranged so as to oppose a target.

Firstly, a photo-polymer is applied onto the disk substrate 101, and the photo-polymer is cured by irradiation with UV rays, while a stamper keeps intimate contact therewith. Then, the stamper is peeled off so as to form a miniscule convexo-concave pattern and pits on a surface of the photo-polymer layer.

In this way, after the formation of the convexo-concave patterns and the pits on the disk substrate 101, the dielectric layer 102 containing SiN is formed on the disk substrate 101 by the reactive sputtering so as to have a thickness of 30 nm.

In addition, on the dielectric layer 102, the recording film 103 is formed by the DC magnetron sputtering using alloy targets. Firstly, the recording layer of TbFeCo is formed by introducing Ar gas, followed by the DC magnetron sputtering so as to have a thickness of 70 nm. On the recording layer, the intermediate cut-off layer containing TbFeCoCr is formed to have a thickness of 10 nm, the control layer containing TbFeCo is formed to have a thickness of 10 nm, and moreover the reproduction layer containing GdFeCoCr is formed sequentially in a thickness of 10 nm using three types of alloy targets having the compositions of $Gd_{24}Fe_{56}Co_7Cr_{13}$, $Gd_{25}Fe_{58}Co_{10}Cr_7$ and $Gd_{26}Fe_{59}Co_{12}Cr_3$ (the compositions are represented by mol%). The respective layers included in the recording film 103 are sequentially deposited by the DC magnetron sputtering using the alloy targets.

Furthermore, the dielectric layer 104 containing SiN is formed by the reactive sputtering so as to have a thickness of 50 nm. Then, on the dielectric layer 104, the sliding coating layer 105 is formed by applying a urethane based UV cured resin impregnated with a lubricant made of alumina based fine particles by the spin coating, followed by the curing thereof.

Here, the reproduction layer of GdFeCoCr is made up of reproduction layers with three compositions, which include a layer having a compensation composition temperature of 130°C and a Curie temperature of 185°C; a layer having a compensation composition temperature of 150°C and a Curie temperature of 220°C; and a layer having a compensation composition temperature of 180°C and a Curie temperature of 280°C. In this process, the Ar pressure during the film deposition is 0.5 Pa and the film deposition rate is 10 nm/sec.

The control layer 84 of TbFeCo has a Curie temperature of 185°C, and under the Curie temperature, rare-earth metal compositions are always predominant in the control layer 84, which is deposited at the Ar gas pressure of 2 Pa and the film deposition rate of 4 nm/sec. The intermediate cut-off layer of TbFeCoCr has a Curie temperature of 160°C, and under the Curie temperature, transition metal compositions are always predominant in the intermediate cut-off layer, which is formed at the Ar gas pressure during the film deposition of 2.5 Pa and the film deposition rate of 5 nm/sec.

The recording layer of TbFeCo is a magnetic film whose composition is adjusted so that a compensation composition temperature is 60°C and a Curie temperature is 315°C. In this process, the pressure of Ar gas during the film deposition is 3.5 Pa and the film deposition rate is 2.5 nm/sec.

In the above-described configuration of the magnetic recording medium 100, the miniscule convexo-concave pattern of 0.3 µm or less is formed on the disk substrate 101 with the photo-polymer formed thereon, followed by the formation of the SiN dielectric layer and the recording film. With this configuration, the pinning of domain walls in the recording layer and a change in magnetic properties due to the miniscule convexo-concave pattern increases the coercive force Hc, which means an increase in Ms·Hc.

Actually, the recording layer according to Embodiment 6 realized a Ms·Hc value of $3.5 \times 10^6$ erg/cm$^3$, whereby magnetic domains can be formed stably even in the case that miniscule magnetic domains are recorded, and recording and reproducing can be accomplished with an excellent signal property even in the case of repeatedly conducted recording and reproducing.

In addition, in Embodiment 6, as shown in Fig. 11, the disk substrate 101 in which the pattern is formed with the 2P in the glass substrate has the tracks for recording information that are magnetically separated with each other by the inversed U-shaped lands formed at a boundary between the grooves and provided in the width direction in proximity and in a row arrangement.

As stated above, the magnetic recording medium 100 of Embodiment 6 has a magnetic film that enables reproduction using the DWDD technology and in which a miniscule convexo-concave pattern is formed on the disk substrate 101 where a region at a boundary between a track region allowing the rewriting of the recorded information and an adjacent track is magnetically cut off. With this configuration, the product of Ms and Hc of the recording layer can be increased. For that reason, the magnetic domains in the recording layer become stable, and the mobility of a domain wall at the magnetic domain to be transcribed into the reproduction layer can be secured during the reproduction of a signal, so that a reproduction signal can be detected with stability.

Here, in Embodiment 6, the miniscule convexo-concave pattern of 0.3 µm or less is formed in the 2P on the glass substrate. However, the present invention is not limited to this. As another configuration, a convexo-concave pattern may be directly processed onto the glass substrate. With the configuration using the glass substrate, the disk substrate can be configured with excellent mechanical properties and surface properties, so that recording/reproducing can be accomplished in the configuration using a magnetic head such as a GMR head as well.

The following describes a recording/reproducing method for the magnetic recording media according to Embodiments 1 to 6 and a recording/reproducing apparatus for the same.

The recording/reproducing method for the magnetic recording media according to Embodiments 1 to 6 and the recording/reproducing apparatus for the same employ a configuration that allows recording/reproducing with respect to the above-described magnetic recording media according to Embodiments 1 to 6 at a reproduction power higher than the normal one. Thereby, the magnetic domains formed in a recording layer of the magnetic recording media are transcribed to a reproduction layer and a reproduction signal of the recorded information is detected by making use of the shift of domain walls in the reproduction layer.

In such a recording/reproducing method for the magnetic recording media, information is recorded, reproduced and erased with laser light. At the time of reproducing, while a laser light spot is shifted relatively with respect to a magnetic recording medium, the light is applied from a side of the reproduction layer of the magnetic recording medium, so that the temperature distribution having the gradient in the traveling direction of the laser light spot is formed on the magnetic recording medium under the tracking control applied using reflected light from the magnetic recording medium. The temperature distribution of the recording film in this process has a temperature region higher than a temperature such that a force that makes the domain wall formed in the reproduction layer shift toward the direction of higher temperatures becomes larger than the coupling force exerted from the recording layer by way of the intermediate layer. By forming such a temperature distribution in the reproduction layer, the transcribed magnetic domains containing the information from the recording layer are formed in the reproduction layer inside the light spot, and the information that is expanded due to the shift of domain walls in the reproduction layer is detected as a change in a deflection surface of the light reflected from the light spot.

Alternatively, information may be recorded and erased using a magnetic head while a temperature of a magnetic recording medium is increased with laser light, and the information may be reproduced with a GMR head. At the time of recording information, a laser light spot is applied to the magnetic recording medium while the laser light spot is shifted relatively with respect to the magnetic recording medium. The magnetic head is arranged on a side of a recording layer of the magnetic recording medium or on a side of a reproduction layer thereof, and by modulating the direction of the magnetic field corresponding to the information to be recorded and under the tracking control, the information is recorded and erased with respect to the recording layer of the magnetic recording medium. Meanwhile, at the time of reproducing information, a laser light spot is applied to the magnetic recording medium, so that the temperature distribution having the gradient in the traveling direction of the magnetic recording medium is formed on the magnetic recording medium. The GMR head for reproducing information is arranged on a side of the reproduction layer, and the information is detected by the GMR head, where the magnetic domain of the recorded information that is transcribed from the recording layer by way of the intermediate layer is expanded due to the shift of domain wall so as to move toward a higher temperature direction resulting from the thermal gradient in the reproduction layer.

In addition, in this process, in the case where the film composition of the reproduction layer varies along the depth direction of the reproduction layer, the size of the transcribed magnetic domains is expanded in stages due to the shift of domain walls, whereby the information can be detected. Furthermore, with the configuration in which the coupling force occurring in the magnetic recording medium by way of the intermediate layer is any one of a magnetic coupling force, an exchange coupling force and a magnetostatic coupling force, the transcription is conducted only in the temperature range that allows the transcription of a signal by the magnetic coupling force between the recording layer and the reproduction layer, and the transcribed magnetic domains are expanded to detect a signal.

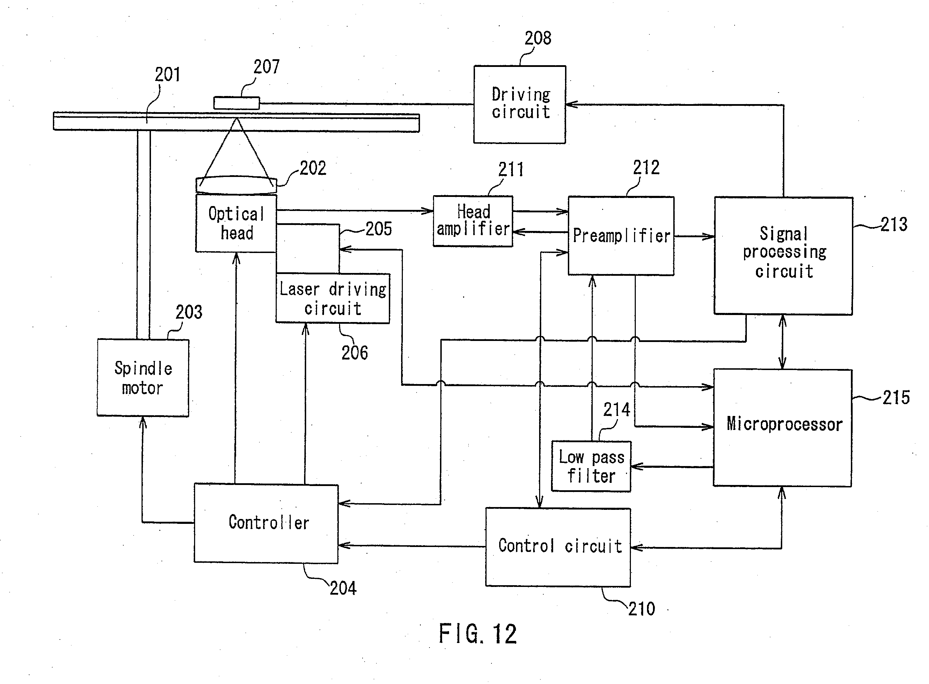

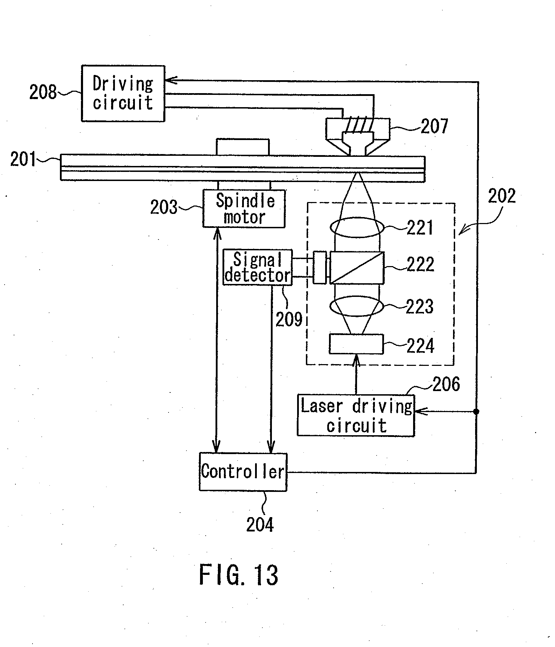

Fig. 12 is a block diagram showing a configuration of a magnetic recording/reproducing apparatus utilizing a magnetic recording medium according to this embodiment, and Fig. 13 is a block diagram showing a configuration of an optical head 202 provided in the magnetic recording/reproducing apparatus. The magnetic recording/reproducing apparatus is provided with: the optical head 202 for applying an optical beam to a magneto-optical disk 201; a spindle motor 203 for rotating the magneto-optical disk 201; a controller 204 for controlling the spindle motor 203 so as to control tracking and focus of the optical beam that is applied to the magneto-optical disk 201 by the optical head 202; a laser driving circuit 206; a magnetic field modulation head 207; a driving circuit 208 for driving the magnetic field modulation head 207; a control circuit 210 for generating a servo signal for controlling the tracking and the focus of the optical beam; a head amplifier 211 for detecting a signal that is recorded on the magneto-optical disk 201; a preamplifier 212; a signal processing circuit 213; a low pass filter 214; and a microprocessor 215 for controlling the overall operation of the magnetic recording/reproducing apparatus.

The optical head 202 includes: an objective lens 221; a polarized beam splitter 222; a collimate lens 223; a laser source 224 for emitting semiconductor laser diode; a superimposition circuit 205 (high frequency module) for the laser source 224; and a signal detector 209.

The operation of the thus configured magnetic recording/reproducing apparatus will be described below. When the magneto-optical disk 201 is inserted into the magnetic recording/reproducing apparatus, the optical head 202 applies laser light, which is set at a reproduction power by the laser driving circuit 206, to the magneto-optical disk 201. The controller 204 controls the focus and the tracking of an actuator provided in the optical head 202 while controlling the spindle motor 203 so that the magneto-optical disk 201 rotates at a predetermined rotational speed.

At the time of recording a signal on the magneto-optical disk 201, while the tracking and the focus of the optical beam are controlled, the strength of the laser light to be applied to the magneto-optical disk 201 is set at a recording power by the laser driving circuit 206. Then, while the driving circuit 208 modulates the magnetic field of the magnetic field modulation head 207, an information signal supplied from the signal processing circuit 213 is recorded on the magneto-optical disk 201.

At the time of reproducing a signal from the magneto-optical disk 201, while the tracking and the focus of the optical beam are controlled in the similar manner to the recording operation, the strength of the laser light to be applied to the magneto-optical disk 201 is set at a reproducing power by the laser driving circuit 206. Then, the head amplifier 211 detects the signal recorded on the magnet-optical disk 201.

The following is a further detailed description of the operation of the magnetic recording/reproducing apparatus. A linear polarized laser beam emitted from the laser source 224 that is provided in the optical head 202 is converted into a parallel beam by the collimate lens 223, which passes through a beam shaping prism (not illustrated) so as to be a parallel beam having a light intensity distribution of a substantially round shape. This laser beam passes through the polarized beam splitter 222 so as to be a P-polarized laser beam, which is collected onto a recording layer formed in the magneto-optical disk 201 by the objective lens 221.

In this process, data information is recorded in the recording layer by utilizing the magnetization direction (upward or downward) of a vertical magnetized film. The light reflected from the recording layer varies with the rotation of a polarization plane that corresponds to the magnetization state due to a magneto-optical effect. Such reflected light in which the polarization plane rotates is separated into P-polarized light and S-polarized light by a Wollaston prism. The respective amounts of the thus separated P-polarized light and S-polarized light are detected by a photoreceptor (not illustrated). As for the detected amounts of light, their differential signal is detected by the detection circuit 209, whereby a reproduction signal can be obtained.

This reproduction signal is amplified by the head amplifier 211 and the preamplifier 212, and is demodulated by the signal processing circuit 213, whereby a data information signal is detected.

Here, when information is recorded at a high density, the size of a recording mark in the vertical magnetized film in the recording layer becomes small. As a result, the detected signal amount necessarily becomes small. Then, as described in Embodiment 1 also, in the magnetic recording/reproducing apparatus according to this embodiment, a laser light power during the reproduction is set larger than the power set in the conventional magnetic recording/reproducing apparatus, whereby the signal can be reproduced in accordance with the DWDD technology. Therefore, even when information is recorded at a high density, a recording mark smaller than the resolution of the optical head can be reproduced.

In addition, when the magnetic recording/reproducing apparatus according to this embodiment is configured in such a manner that the magnetic field modulation head 207 is combined with a magnetic head such as a GMR head, a reproduction signal can be expanded by shifting domain walls while laser light is applied to the magnetic disk according to Embodiment 4, so that a signal can be reproduced by the magnetic head.

As stated above, this embodiment has the configuration having a magnetic film that allows reproduction in accordance with the DWDD technology and having a magnetically separated region at a boundary portion between a track region in which recorded information is rewritable and an adjacent track, and therefore the mobility of domain walls of the magnetic recording medium can be secured. In addition, a recording/reproducing method for a magneto-optical recording medium can be realized by which the magnetic domains in the recording layer have stability by virtue of the configuration having a large product of Ms·Hc of the recording layer, and a reproduction signal can be detected with stability because the domain walls can shift easily in the transcribed magnetic domains.

Note here that, the above embodiments describe that their magnetic recording media have the configuration of the disk substrate formed with polycarbonate or polyolefin, with the miniscule pattern formed on the glass substrate using the photo-polymer, or with the guide grooves or pre-pits formed thereon. However, the present invention is not limited to this. The magnetic recording media may have the configuration with an epoxy based resin, other plastic materials or a miniscule pattern formed directly on a glass substrate, and moreover the disk substrate may be made of the combination of a glass substrate and a plastic material.

In addition, as the miniscule pattern formed on the glass substrate using the photo-polymer, the embodiment describes the 0.3 μm circular pattern. However, the present invention is not limited to this. For example, a pattern of 0.5 μm or less may be formed. Alternatively, in the case where concaves and convexes smaller in size than the smallest pattern of the magnetic domains with other shapes including a hemisphere and a square are formed, the similar effect for expanding the Ms·Hc of the recording layer can be obtained as long as such miniscule shapes have uniformity and noise does not occur in a signal from the magnetic domains.

Furthermore, the embodiments of the present invention describe the configuration in which the surface roughness Ra of the surface for recording information is increased to 1.0 nm or more by etching of the under layer. However, by increasing the particle diameter during the film deposition of a material of the under layer by the process condition for the film deposition so as to increase the surface roughness Ra of the recording surface to 1.0 nm or more, a magneto-optical recording medium with an increased MsHc of a recording layer similarly can be realized.

Moreover, the embodiments describe the magnetic recording media having the configuration in which the disk substrate is provided with the spiral-shaped or annular-shaped guide grooves for tracking guide of an optical spot or with the pre-pits. However, a disk substrate having a configuration with a wobbled spiral-shaped guide grooves containing address information or pre-pits for wobbling tracking guidance in accordance with the sampler servo system and the like may be used. Additionally, although the track pitch of the disk substrate according to the embodiments ranges from 0.55 μm to 0.8 μm, inclusive, and the groove width ranges from 0.4 μm to 0.6 μm, inclusive, the recording tracks may be cut off from each other by a rectangular or an inversed V-shaped land between grooves in the information recording track with the above-stated configuration or grooves, where the track pitch may be 1.0 μm or less and grooves or lands having a width between 0.2 μm and 0.8 μm, inclusive, may be formed between lands or grooves for recording information.

In addition, the above embodiments describe the magnetic recording media having the configuration in which a SiN film and a ZnSSiO$_2$ film are used as the first and the second dielectric layers. However, a dielectric film made of a ZnS film or other chalcogen compounds, an oxide film such as TaO$_2$, a nitride film such AlN, or a thin film made of these compounds may be used. The dielectric layers may have a thickness ranging from 20 nm to 300 nm, inclusive, and may be configured so as to increase a signal amount by the enhancement effect.

Furthermore, the above embodiments describe as the magnetic films constituting the respective layers in the magnetic recording medium, the laminated configuration using GdFeCoAl and GdFeCoCr film as the reproduction layer, TbDyFeCo, TbDyFeCr, TbFeCoCr, TbFeCo and TbFeAl, films as the control layer and the intermediate cut-off layer, TbFeCo and TbFeCoCr films as the recording layer. However, the following may be used including: a rare-earth group - transition metal based ferrimagnetic amorphous alloy such as TbFe, TbHoFe, TbCo, GdCo, GdTbFe, GdTbFeCo, GdTbHoFeCo, DyFeCo and GdFeCoSi; a mixed material thereof, a magneto-optical material using a polycrystalline material of a Mn based magnetic film such as Mn-Bi, MnBiAl or PtMnSn; a platinum family-transition metal alloy such as garnet, PtCo or PdCo; or a gold, a platinum family-transition metal periodic structured alloy film such as Pt/Co, Pd/CO and Pr/Fe.

Moreover, the recording film may be configured with a plurality of recording layers made of the above-described materials, each made of different materials or different compositions, or made of a material as a mixture thereof. Additionally, in the case where elements such as Cr, Al, Ti, Pt and Nb are added to the above-described magnetic layer for the purpose of the improvement in corrosion resistance, equal or better effects can be obtained as long as such a layer has a configuration for increasing the MsHc beyond a predetermined value.

In addition, particularly, in a configuration in which materials having a crystalline configuration of Pt/Co and Pr/Fe or rare-earth metal-transition metal are laminated in a superlattice manner, a large Ms·Hc value of $1 \times 10^8$ erg/cm$^3$ can be obtained. In such a case also, the same effects can be obtained.

Furthermore, the embodiments describe, as the film configuration of the recording film including the lamination of a reproduction layer, a control layer, an intermediate cut-off layer, a recording layer and the like, the reproduction layer with a thickness between 30 nm and 60 nm, inclusive; the control layer or the intermediate cut-off layer with a thickness between 5 nm and 15 nm, inclusive, and the recording layer with a thickness between 60 nm and 120 nm, inclusive. The present invention is not limited to the above-described thicknesses, and as long as a sufficient magnetic coupling force can be obtained between the recording layer and the reproduction layer so as to satisfy the properties of the present invention, the thicknesses may range from 5 nm and 200 nm, inclusive. Preferably, the reproduction layer has a thickness between 10 nm and 100 nm, inclusive, the control layer has a thickness between 5 nm and 50 nm, inclusive, the intermediate cut-off layer has a thickness between 5 nm and 50 nm, inclusive, and the recording layer has a thickness between 30 nm and 250 nm, inclusive, whereby the equivalent effects can be obtained.

Moreover, the recording layer in the magnetic recording media according to the above-stated embodiments may be formed by multi-source sputtering with targets using the respective metal materials or by the magnetron sputtering using alloy targets in which required materials are mixed, where the degree of vacuum achieved during the film deposition is $1.0 \times 10^{-5}$ Pa or less and the pressure of the introduced gas during the film deposition is set between 0.6 Pa and 6.0 Pa, inclusive.

As the gas introduced in this process, Ar gas, Ne gas, Kr gas and Xe gas may be included at least. Additionally, when the partial pressures of O$_2$, H$_2$, O, N$_2$

and $H_2$ are 100 ppm or less with respect to the above-stated pressure during the film deposition, an increased effect can be obtained. Here, the respective partial pressures with respect to the pressure of the sputtering gas can be measured easily by connecting a gas analyzer tube with a vacuum chamber.

In addition, as for the recording layers in the magnetic recording media of the above-stated embodiments, the films are deposited at a rate between 0.7 nm/sec and 5 nm/sec, inclusive. However, the range between 0.5 nm/sec and 10 nm/sec, inclusive, allows the configuration of the films to contain inert gases, even when the composition of the deposited recording film is changed due to the film deposition conditions such as a gas pressure of Ar, Ne, Kr, Xe and the like, a bias magnetic field during the film deposition in the manufacturing process, or a method for laminating the films periodically, thus enabling the formation of a desired recording layer.

Furthermore, with the configuration for increasing the MsHc by controlling the conditions of a film deposition apparatus such as a multi-source sputtering system or a static opposed type sputtering system, a signal in the recording layer can be securely transcribed, and reproduction can be conducted by making a domain wall in the reproduction layer shift smoothly so as to expand the domain wall.

Moreover, in order to improve the recording/reproducing properties, a recording auxiliary layer, a transcription control layer or other magnetic films may be included. Also, as the intermediate cut-off layer, a magnetic film with a multilayered structure in which composition or domain-wall energy density is changed in the film thickness direction may be provided.

In addition, by employing a method for detecting a recording/reproducing signal from the above-stated recording layer with an optical head with a short wavelength and high N.A., a highly sensitive GMR magnetic head and TMR head, and the like, the equivalent effects can be obtained in the configuration including a single layer of the recording layer, or a multilayered film configuration that does not use the magnetic super-resolution and the magnetic-domain expansion by the domain-wall shift, as well.

Furthermore, although the configuration in which the protective coating layer is formed directly on the dielectric layer on the recording layer has been described, a heat absorption layer may be formed directly on the recording layer or via the dielectric layer. As a material for the heat absorption layer, an alloy material including at least one of AlTi, Al, Cu, Ag and Au may be used, where the material has a thermal conductivity larger than that of the recording film.

Moreover, although the configuration in which an epoxy acrylate based resin, a urethane based resin, or an alumina based lubricant as the sliding coating layer are formed on the dielectric layer as the overcoat layer (protective layer) has been described, a configuration with other UV curing type resins, thermosetting resins, a hot-melt adhesive, or a combination of these materials with a sliding coating material can be adopted.

In addition, although the magnetic recording media using the DWDD technology and the recording/reproducing system for the same have been described, even in other domain-wall shift types of magnetic-domain expansion reproduction system, an expansion reproduction system for the magnetic domains to be reproduced by a shrink operation, or a reproduction magnetic-field alternating type reproduction system also, excellent effects of high-sensitivity and high-density recording/reproducing can be obtained so as to give excellent stability of miniscule magnetic domains and allows the transcription and reproduction onto/from the reproduction layer with ease, as long as the recording/reproducing system is used for enhancing a signal quality and making recording density higher and a recording layer with increased Ms·Hc is used.

As stated above, in the magnetic recording media according to the embodiments, the recording density and the transcription rate can be improved significantly by the domain-wall shift type expansion reproduction system that makes use of the temperature gradient in the recording film. These magnetic recording media have the configuration in which the MsHc of the recording layer for rewriting recorded information is expanded, and therefore, even in the case of high-density recording, the magnetic domains can be stabilized, and a reproduction signal can be expanded by the stable shifting of the transcribed magnetic domains in accordance with the DWDD technology.

In addition, the configuration with the recording layer having a lamination period of 2 nm or less, the configuration of the surface roughness of the under layer under the recording layer of 1.0 nm or more, or the configuration with the recording layer formed on the pattern of 50 nm or less in size can realize a magneto-optical recording medium that allows excellent magneto-optical recording/reproducing in accordance with the DWDD technology even in the case of a short recording mark length and has excellent properties when information is repeatedly recorded and reproduced.

In this way, according to the embodiments, reproduction resolution of an information signal recorded on the magnetic recording medium with high density can be increased without constraints due to optical diffraction limit. Moreover, an information signal can be recorded/reproduced without an influence of a deterioration of detection sensitivity of a GMR head, resulting from a decrease in the width of the magnetic domains in the case of the high-density recording.

Furthermore, a high-density magneto-optical recording medium with high reliability of signal properties can be provided in which greater densities allow the data transfer rate to be improved, the properties of a reproduction signal of transcribed magnetic domains in accordance with the DWDD technology has excellent stability because the transcription properties of the magnetic domains into the reproduction layer have stability, and moreover the amplitude of a reproduction signal can be increased. Also, the reproduction can be accomplished with a reduced superimposed signal, and therefore various kinds of margin can be increased, so that excellent effects of a decrease in the manufacturing cost of the magnetic recording medium and the cost of the recording/reproducing apparatus can be obtained.

The present invention can be applied to both of a magneto-optical recording medium in which information is recorded/reproduced by means of an optical beam and a magnetic recording medium such as hard disk in which information is recorded/reproduced by a magnetic field from a magnetic head.

According to the present invention, a magnetic recording medium is provided, which enables recording/reproducing of a signal at high speed beyond the diffraction limit of an optical spot for recording/reproducing information and enables the reproduction of a signal without a decrease in the amount of a detected signal even in the case of miniscule magnetic domains, whereby recording density and transfer speed are improved significantly and magnetic domains can be formed stably when the information is recorded at a high density, and a method for producing the recording magnetic medium and a magnetic recording/reproducing apparatus are provided.

**Claims**

1. A magnetic recording medium, comprising:

     a disk substrate; and
     a recording layer having magnetic anisotropy along a direction perpendicular to a surface of the disk substrate,

     wherein the recording layer is formed so that a product of a coercive force Hc and saturated magnetization Ms of the recording layer (Ms·Hc) at room temperatures is increased sufficiently so that a shortest mark length of the recording layer can be decreased to a desired value.

2. The magnetic recording medium according to claim 1, wherein the product Ms·Hc of the coercive force Hc and the saturated magnetization Ms satisfies the following relationship:

$$Ms \cdot Hc > 3 \times 10^6 \ erg/cm^3.$$

3. The magnetic recording medium according to claim 1 or 2, further comprising:

     a reproduction layer formed between the recording layer and the disk substrate for reproducing information recorded in the recording layer; and
an intermediate layer formed between the reproduction layer and the recording layer for controlling exchange coupling between the reproduction layer and the recording layer,

     wherein the recorded information is thermomagnetically recorded as magnetic domains in the recording layer,
     the magnetic domains are transcribed into the reproduction layer, and
     a domain wall between the magnetic domains that are transcribed into the reproduction layer shifts along a direction parallel to a surface of the reproduction layer, so that the recorded information is reproduced.

4. The magnetic recording medium according to claim 1, 2, or 3, wherein the shortest mark length of recording marks that correspond to a pattern of the recorded information formed in the recording layer is 0.2 $\mu$m or less.

5. The magnetic recording medium according to claim 1, 2, 3, or 4, wherein the recording layer comprises at least Tb, Fe and Co or comprises a super-latticed structure.

6. The magnetic recording medium according to claim 5, wherein the Tb, Fe and Co contained in the recording layer are laminated periodically.

7. The magnetic recording medium according to claim 5, wherein the Tb, Fe and Co contained in the recording layer are laminated periodically with a thickness of 2 nm or less.

8. The magnetic recording medium according to claim 5, 6, or 7, wherein, in the recording layer, layers of different materials or different composition rates are periodically laminated with each layer having a thickness of 2 nm or less.

9. The magnetic recording medium according to claim 5, 6, 7 or 8, wherein the recording layer is configured with periodic lamination of a layer of rare-earth rich composition and a layer of transition metal rich composition.

10. The magnetic recording medium according to any one of the preceding claims, wherein the recording layer is formed on an under layer whose surface roughness Ra is at least 0.5 nm or more.

11. The magnetic recording medium according to claim 10, wherein a substrate, a dielectric layer or a magnetic layer is used as the under layer.

12. The magnetic recording medium according to any one of the preceding claims, wherein the recording layer is formed by film deposition using an inert gas.

13. The magnetic recording medium according to claim 12, wherein the inert gas comprises at least one selected from Ne, Ar, Kr and Xe.

14. The magnetic recording medium according to any one of the preceding claims, wherein the recording layer comprises at least one selected from Ne, Ar, Kr and Xe atoms.

15. The magnetic recording medium according to any one of the preceding claims, wherein a size of magnetic domains formed in the recording layer is 0.5 μm or less.

16. The magnetic recording medium according to any one of the preceding claims, wherein, on the disk substrate, a pit-shaped pattern is formed corresponding to a pattern of magnetic domains formed in the recording layer.

17. The magnetic recording medium according to any one of the preceding claims, wherein, on the disk substrate, a pit-shaped convexo-concave pattern is formed, the convexo-concavo pattern having a size smaller than that of the smallest pattern of magnetic domains formed in the recording layer.

18. A method for producing the magnetic recording medium according to claim 10, 11, or any one of claims 12 to 17 when dependent upon claim 10, wherein a shape of a surface of the under layer for forming the recording layer thereon is changed by etching.

19. The method for producing a magnetic recording medium according to claim 18, wherein a substrate, a dielectric layer or a magnetic layer is used as the under layer.

20. The method for producing a magnetic recording medium according to claim 18, or 19, wherein the etching is dry etching including ion irradiation etching and plasma etching.

21. A method for producing the magnetic recording medium according to claim 3, or any one of claims 4 to 17 when dependent upon claim 3, wherein at the time of forming the recording layer, after a vacuum chamber is evacuated so that a degree of vacuum achieved in the vacuum chamber becomes $1 \times 10^{-5}$ Pa or less, at least one selected from Ar gas, Ne gas, Kr gas and Xe gas is introduced into the vacuum chamber.

22. The method for producing a magnetic recording medium according to claim 21, wherein partial pressures of $O_2$, $H_2O$, $N_2$ and $H_2$ in the vacuum chamber at the time of forming the recording layer are 100 ppm or less with respect to a film deposition pressure.

23. The method for producing a magnetic recording medium according to claim 22, wherein the film deposition pressure for forming the recording film in the vacuum chamber ranges from 0.4 Pa to 6.0 Pa, inclusive.

24. The method for producing a magnetic recording medium according to claim 21, 22, or 23, wherein a film deposition rate for forming the recording layer ranges from 0.5 nm/sec to 10 nm/sec, inclusive.

25. A magnetic recording/reproducing apparatus, comprising:

a recording unit provided for recording information in the recording layer that is formed in the magnetic recording medium according to any one of claims 1 to 17; and
a reproducing unit for transcribing magnetic domains that are formed in the recording layer into a reproduction layer and for making a domain wall between the transcribed magnetic domains shift so as to reproduce the recorded information.

26. The magnetic recording/reproducing apparatus according to claim 25, wherein the reproducing unit expands the transcribed magnetic domains by forming a thermal gradient in the reproduction layer so as to reproduce the recorded information.

27. The magnetic recording/reproducing apparatus according to claim 25, wherein the reproducing unit expands the transcribed magnetic domains by applying a high-frequency magnetic field modulation from outside to the reproduction layer so as to reproduce the recorded information.

FIG. 1

FIG. 2A

Laser light spot

13
14 }18
15

W1

FIG. 2B

Temperature distribution of recording film 18

T

Ts

Tc

Position X

W2

FIG. 2C

Domain-wall energy density δ

FIG. 2D

Driving force F for domain walls

FIG. 3

FIG. 4

FIG. 5

FIG. 6

FIG. 7

FIG. 8

60

68
62
63
64 } 69
65
66
70
67

61

FIG. 9

80

88
82
83
84 } 91
85
86
87
90
89
81

FIG. 10

FIG. 11

EP 1 400 956 A2

FIG. 12

FIG. 13